# EUROPEAN PATENT SPECIFICATION

(11) **EP 4 744 618 B1**
(45) Date of publication and mention of the grant of the patent: **09.12.2026**
(21) Application number: 24905103.8
(22) Date of filing: 05.09.2024
(51) Int. Cl.: A61C 17/34, A61C 17/02, A61C 17/22, A61C 17/26

(54) **ORAL CLEANER**
MUNDREINIGUNGSVORRICHTUNG
DISPOSITIF DE LAVAGE BUCCAL

(30) Priority: 19.08.2024 CN 202411140925
(43) Date of publication of application: 20.05.2026
(73) Proprietor: Shenzhen Soocas Technology Co., Ltd., Shenzhen, Guangdong 518000 (CN)
(72) Inventor: ZUO, Jie, Shenzhen, Guangdong 518000 (CN); GAN, Wenxu, Shenzhen, Guangdong 518000 (CN); LI, Zhoujian, Shenzhen, Guangdong 518000 (CN)
(74) Representative: Santarelli
(86) International application number: PCT/CN2024/117024
(87) International publication number: WO 2026/040131

(56) References cited:
- WO-A1-2004/021958
- CN-A- 117 653 390
- CN-A- 117 653 390
- CN-U- 211 381 891
- CN-U- 211 381 891
- CN-U- 216 724 839
- CN-U- 216 724 839
- CN-U- 220 158 442

## Description

### TECHNICAL FIELD

Embodiments of the present disclosure relate to the field of oral cleaner technology, and more particularly, to an oral cleaner.

### BACKGROUND

As people pay more attention to oral care, oral cleaners have gradually become common household oral care tools. The oral cleaners with teeth rinsing functions such as oral irrigators and integrated rinsing cleaners can use water pumps to pump out high-speed water columns with a certain pressure, and can clean teeth and slits between teeth by means of impact force of the high-speed water columns.

A related oral cleaner with teeth rinsing functions may include a casing, a water pump, a liquid storage cavity, and a teeth rinsing head. The teeth rinsing head may be arranged at one end of the casing, and the teeth rinsing head has a teeth rinsing channel for liquid flow. The liquid storage cavity and the water pump are both arranged in an inner cavity of the casing, and the water pump can pump out a liquid in the liquid storage cavity through the teeth rinsing channel.

However, the above-mentioned oral cleaners have a problem of higher power consumption and shorter endurance of the water pump.

Document CN216724839U discloses an electric toothbrush having both a brushing function and a spraying function. The electric toothbrush includes a main unit, a brush head and a liquid reservoir. A pump in the main unit draws a liquid medium from the liquid reservoir and delivers it to the brush head through a transmission channel in a central shaft of a motor, and the liquid medium is sprayed out through a spray hole on the brush head in the form of a spray for oral disinfection.

Document CN117653390A discloses an oral cleaning appliance having both an electric toothbrush function and an oral irrigator function. The appliance includes a grip housing, a brush head, a spray head, a fluid storage unit and a fluid pumping unit. The fluid pumping unit has a fluid pump chamber, a fluid input channel and a fluid output channel. A displacement unit is driven by a linkage unit to reciprocate, so as to cyclically increase and decrease the volume of the fluid pump chamber to pump a liquid from the fluid storage unit to the spray head. The stroke of the displacement unit and the volume of the fluid pump chamber are optimised to balance cleaning power and product size.

Document CN211381891U discloses an oral cleaning device integrating an electric toothbrush function and an oral irrigator function. The device includes a brush head, a liquid storage tank, a pump, a vibration motor and a pumping motor. The vibration motor, the pumping motor and a pump housing are arranged in different sections along a vertical direction to achieve a slim structure. A liquid in the liquid storage tank is drawn by the pump and delivered to the brush head through an inner tube of the vibration motor, and is sprayed out through a top hole of the brush head.

### SUMMARY

Objectives of embodiments of the present disclosure are intended to provide an oral cleaner, which can solve the problem of higher power consumption and shorter endurance of water pumps. The present invention is set out in the appended claims.

To achieve the above objectives, one aspect of the embodiments of the present disclosure provides an oral cleaner, which includes: a cleaning accessory having a first fluid channel and an outlet communicated with the first fluid channel; and an oral cleaning apparatus, including a casing having two opposite ends extending along a first axis, an inner cavity of the casing is separated into a power cavity and a liquid storage cavity extending along the first axis. The oral cleaning apparatus further includes: a power unit at least partially arranged inside the power cavity, where the power unit includes a pump mechanism having a liquid inlet end and a liquid outlet end; a second fluid channel communicated with the liquid inlet end of the pump mechanism, where the second fluid channel is communicated with the liquid storage cavity and is configured to transport a liquid in the liquid storage cavity to the pump mechanism; and a third fluid channel communicated with the liquid outlet end of the pump mechanism, where the third fluid channel is communicated with the first fluid channel and is configured to output liquid impact through the outlet. A length-to-diameter ratio of at least one of the first fluid channel, the second fluid channel and the third fluid channel ranges between 30 and 70; the diameter of each part of the first fluid channel is basically the same.

Alternatively, the length-to-diameter ratio of at least one of the first fluid channel, the second fluid channel and the third fluid channel ranges between 35 and 65.

Alternatively, the first fluid channel, the second fluid channel, and the third fluid channel are separately comprised of fluid sub channels formed by one or more pipeline components: the length-to-diameter ratio of at least one fluid sub channel ranges between 30 and 70; or the length-to-diameter ratio of at least one fluid sub channel ranges between 35 and 65; or the length-to-diameter ratio of each fluid sub channel ranges between 30 and 70; or the length-to-diameter ratio of each fluid sub channel ranges between 35 and 65.

Alternatively, the second fluid channel is formed by a liquid inlet pipe assembly configured to stretch into the liquid storage cavity.

Alternatively, space for liquid flow is provided between a bottom end surface of the liquid inlet pipe assembly and a bottom cavity surface of the liquid storage cavity; and/or the liquid inlet pipe assembly extends along an extension direction of the first axis.

Alternatively, a distance between the bottom end surface of the liquid inlet pipe assembly and the bottom cavity surface of the liquid storage cavity is greater than 0 mm and less than 1 mm.

Alternatively, the liquid inlet pipe assembly includes a first pipe body and a filter joint communicated with the first pipe body, where one end of the first pipe body is communicated with the liquid inlet end of the pump mechanism, other end of the first pipe body is communicated with the filter j oint, and one end of the filter joint far away from the first pipe body is communicated with the liquid storage cavity. A length of the second fluid channel is a length of an inner cavity formed by communicating the first pipe body with the filter joint; and a diameter of the second fluid channel is a diameter of the inner cavity formed by communicating the first pipe body with the filter joint.

Alternatively, the filter joint includes a connecting pipe and a filter sequentially communicated, where the connecting pipe is closer to the first pipe body and is directly communicated with the first pipe body.

Alternatively, the connecting pipe is made of an elastic material, and in an undeformed state, a diameter of the connecting pipe is equal to that of the first pipe body; and/or at least a portion of the connecting pipe close to the first pipe body is sleeved on an outer wall at the other end of the first pipe body; and/or at least a portion of the connecting pipe away from the first pipe body is sleeved on a portion of an outer wall of the filter, and a diameter of the filter is equal to that of the first pipe body; and/or the filter joint also includes a filter net; and/or the filter and the first pipe body are made of the same material.

Alternatively, the pump mechanism has a pump chamber and a second pipe body directly communicated with the pump chamber, and the second pipe body has a first segment and a second segment communicated with each other, where the first segment of the second pipe body is closer to the pump chamber, the second segment of the second pipe body is communicated with the second fluid channel, and a diameter of the first segment of the second pipe body is smaller than that of the second segment of the second pipe body.

Alternatively, the diameter of the second segment of the second pipe body is equal to that of the second fluid channel.

Alternatively, a ratio of the diameter of the first segment of the second pipe body to the diameter of the second segment of the second pipe body ranges between 0.25 and 0.75.

Alternatively, the ratio of the diameter of the first segment of the second pipe body to the diameter of the second segment of the second pipe body is 0.5±0.1.

Alternatively, an inner pipe wall of the first segment of the second pipe body is connected to an inner pipe wall of the second segment of the second pipe body by means of a conical pipe segment.

Alternatively, a frictional resistance coefficient of an inner pipe wall of the liquid inlet pipe assembly is smaller than 0.3.

Alternatively, the liquid inlet pipe assembly is at least partially made of a plastic material.

Alternatively, the power unit also includes a motor having an output shaft. The third fluid channel includes a first flow channel formed by the output shaft and a second flow channel formed by a connector, where the second flow channel connects the liquid outlet end of the pump mechanism to the first flow channel. A length-to-diameter ratio of the first flow channel ranges between 30 and 70, or a length-to-diameter ratio of the second flow channel ranges between 30 and 70.

Alternatively, both the length-to-diameter ratio of the first flow channel and the length-to-diameter ratio of the second flow channel range between 30 and 70; and/or both the length-to-diameter ratio of the first flow channel and the length-to-diameter ratio of the second flow channel range between 35 and 65; and/or the output shaft is made of a metal material; and/or the output shaft extends along the extension direction of the first axis. The length-to-diameter ratio of the first flow channel is equal to that of the second flow channel.

Alternatively, at least two of the first fluid channel, the second fluid channel, and the third fluid channel have the same length-to-diameter ratio; or the first fluid channel, the second fluid channel, and the third fluid channel have the same length-to-diameter ratio.

Alternatively, at least two fluid sub channels have the same length-to-diameter ratio; or each of the fluid sub channels has the same length-to-diameter ratio.

Alternatively, at least a portion of the first fluid channel, at least a portion of the second fluid channel, and at least a portion of the third fluid channel extend along the extension direction of the first axis; and/or an angle is formed between a direction of outputting the liquid impact through the outlet and the extension direction of the first axis.

Alternatively, at least a portion of the first fluid channel, at least a portion of the second fluid channel, and at least a portion of the third fluid channel have the same frictional resistance coefficient.

In the present disclosure, the length-to-diameter ratio of the first fluid channel, the length-to-diameter ratio of the second fluid channel, and the length-to-diameter ratio of the third fluid channel are set between 30 and 70, and pressure drop generated when the liquid passes through the fluid channel is reduced, which can effectively reduce power consumption of the pump mechanism.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of a related oral cleaner;
FIG. 2 is a schematic diagram of an oral cleaner according to an embodiment of the present disclosure;
FIG. 3 is a longitudinal profile view of the oral cleaner shown in FIG. 2;
FIG. 4 is a partial view of another longitudinal profile of the oral cleaner shown in FIG. 2;
FIG. 5 is an internal layout diagram of an oral cleaning apparatus according to an embodiment of the present disclosure;
FIG. 6 is another internal layout diagram of the oral cleaning apparatus according to an embodiment of the present disclosure;
FIG. 7 is a section view of a separator shown in FIG. 4;
FIG. 8 is a partial section view of a casing at an airflow groove according to an embodiment of the present disclosure;
FIG. 9 is a partial section view of another casing at an airflow groove according to an embodiment of the present disclosure;
FIG. 10 is a partial section view of a casing at a non-airflow groove according to an embodiment of the present disclosure;
FIG. 11 is a schematic diagram of a cover body and a third sealing ring according to an embodiment of the present disclosure;
FIG. 12 is an exploded view of the oral cleaner according to an embodiment of the present disclosure;
FIG. 13 is an exploded view of a motor, a connector, a mounting member and a circuit board shown in FIG. 12;
FIG. 14 is an assembly stereogram of the mounting member, the connector and a pump mechanism shown in FIG. 13;
FIG. 15 is an exploded view of the connector, the mounting member and the motor of the oral cleaner according to an embodiment of the present disclosure;
FIG. 16 is an exploded view of the pump mechanism, the mounting member and the connector shown inFIG. 15;
FIG. 17 is a partial schematic diagram of FIG. 3;
FIG. 18 is an exploded view of a connector according to an embodiment of the present disclosure;
FIG. 19 shows a relationship between L/D and impact force when a frictional resistance coefficient f is fixed;
FIG. 20 shows a relationship between the L/D and flow rate when the frictional resistance coefficient f is fixed;
FIG. 21 shows a relationship between the frictional resistance coefficient f and the impact force when the L/D is fixed;
FIG. 22 shows the relationship between the frictional resistance coefficient f and the flow rate when the L/D is fixed;
FIG. 23 shows a relationship between the L/D and power of the pump mechanism when the frictional resistance coefficient f is fixed; and
FIG. 24 shows a relationship between the frictional resistance coefficient f and the power of the pump mechanism when the frictional resistance coefficient f is fixed.

Reference numerals in the accompanying drawings:
oral cleaning apparatus 1000;
casing 100; power cavity 110; liquid storage cavity 120; shell body 130; second mating surface 131; cover body 140; third sealing groove 141; third sealing cavity 142; airflow groove 143; flow guide groove 144; first mating surface 145; top end 160; bottom end 170; microchannel 180; fit-up gap 190;
motor 200; output shaft 210; first flow channel 211; motor body 220;
pump mechanism 300; liquid inlet end 310; first valve part 311; first end cover part 312; liquid outlet end 320; second valve part 321; second end cover part 322; power end 330; pump housing 331; piston 332; driving member 333;
connector 400; second flow channel 410; first flow segment 411; second flow segment 412; first arc segment 4121; second arc segment 4122; third flow channel 420; first connecting part 430; reversing chamber 431; first intrados 432; second connecting part 440; second intrados 441; cover plate segment 442; convex segment 443; baffle segment 444; mounting groove 450; second pipe body 460; first segment 461; second segment 462; conical pipe segment 463;
mounting member 500; first mounting part 510; second mounting part 520; through hole 530;
separator 600; accommodating chamber 610; accommodating hole 620; first part 630; second part 640; third part 650; fourth flow channel 651; fourth part 660; fifth part 670; intercommunicating pore 680; first pipe body 690;
liquid inlet pipe assembly 700; second fluid channel 730; third fluid channel 740;
energy source 710; circuit board 720;
filter joint 800; connecting pipe 850; filter 860;
first sealing element 810; second sealing element 820; third sealing element 830; fourth sealing element 840;
second vibration damper 912; third vibration damper 913; fourth vibration damper 914;
first fastener 921; second fastener 922; third fastener 923; fourth fastener 924; and
cleaning accessory 2000; brush body 2100; first fluid channel 2200; and outlet 2300.

### DETAILED DESCRIPTION

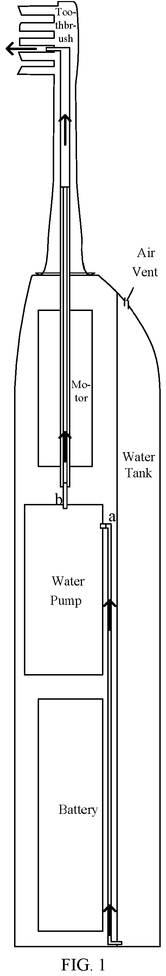

FIG. 1 is a schematic diagram of a related oral cleaner. Referring to FIG. 1, the related oral cleaner has a slender body, where a water tank is arranged on a right side of the body, and a motor, a water pump, and a battery are arranged on a left side of the body. A longitudinal length of the water tank is almost equal to that of the body, and the water tank has a smaller diameter, which may cause it difficult for a user to clean an inner wall of the water tank. In addition, the water pump is arranged in a left middle of the body, and an input end a and an output end b of the water pump are arranged on an upper part of the water pump, resulting in an overlong longitudinal distance between the input end a of the water pump and a bottom of the water tank, resulting in a longer waterway between the input end a of the water pump and the bottom of the water tank, which is not conducive to pumping a liquid in the water tank by the water pump.

In view of the above technical problems, an inventor of the present disclosure comes up with an idea of arranging the water tank at a lower part of the body and arranging the motor, the water pump and so on above the water tank, to shorten the longitudinal length of the water tank, making it easier to clean the water tank. Furthermore, a transverse width of the body can also be reduced to make it easier for the user to grip the body. However, this may reduce a volume of the water tank. To maximize the volume of the water tank, the inventor of the present disclosure attempts to shorten the longitudinal length of the water pump. Specifically, the input end and the output end of the water pump may be changed from being arranged above the water pump to being arranged on a lower lateral side of the water pump, which not only increases a longitudinal depth of the sunken water tank, but also shortens the distance between the input end of the water pump and the bottom of the water tank, and improves a pumping effect of the water pump. In addition, a reversing waterway may be arranged in space on a lateral side of the water pump, such that the output end of the water pump arranged on the lower lateral side is communicated with a flow channel of an output shaft of the motor arranged on the upper part. In this way, in the case of ensuring the appearance of the slender body, the water tank, the water pump, and the motor are reasonably distributed, which not only increases the volume of the sunken water tank, but also improves the pumping effect of the water pump.

To make the objectives, technical solutions, and advantages of the embodiments of the present disclosure clearer, the technical solutions in the embodiments of the present disclosure will be described clearly and completely below, in conjunction with the accompanying drawings in the embodiments of the present disclosure. Apparently, the described embodiments are some but not all of the embodiments of the present disclosure.

All other embodiments obtained by a person of ordinary skill in the art based on the embodiments of the present disclosure without creative efforts shall fall within the protection scope of the present disclosure. The following embodiments and features thereof may be combined with each other on a non-conflict basis.

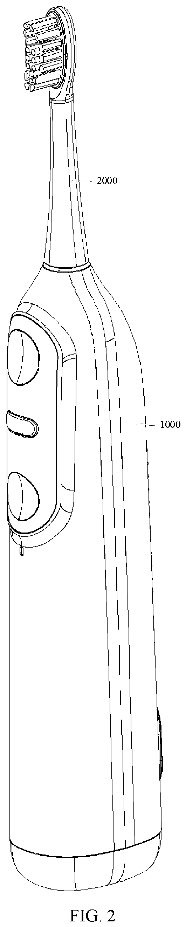

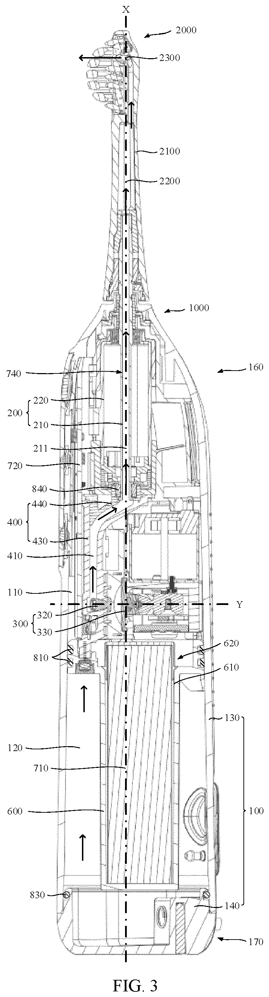

FIG. 2 is a schematic diagram of an oral cleaner according to an embodiment of the present disclosure, and FIG. 3 is a longitudinal profile view of the oral cleaner shown in FIG. 2. With reference to FIG. 2 and FIG. 3, the oral cleaner provided in the embodiments of the present disclosure may include an oral cleaning apparatus 1000 and a cleaning accessory 2000, where the cleaning accessory 2000 may be a device capable of cleaning an oral cavity, such as a toothbrush head, a washing head, or an integrated rinsing head. In FIG. 3 the cleaning accessory 2000 is shown as the integrated rinsing head, where the cleaning accessory 2000 may include a brush body 2100, and the brush body 2100 may have a first fluid channel 2200 and an outlet 2300 communicated with the first fluid channel 2200.

With continued reference to FIG. 3, the oral cleaning apparatus 1000 may include a casing 100 and a power unit. The power unit may include a power component and a connector 400. To make it easier for the user to grip the body, the casing 100 may be shaped like a slender cylinder. A cross section of the casing 100 may be circular or non-circular (such as D-shaped, oval, or polygonal). A first axis X is a center line of the casing 100. That is, a center point of each cross section of the casing 100 may be positioned on the first axis X. The casing 100 may extend along a direction of the first axis X (an up-down direction inFIG. 3), and the casing 100 may have, along the direction of the first axis X, a top end 160 and a bottom end 170 arranged opposite to each other. Interior of the casing 100 may be hollow, such that the casing 100 may have an inner cavity.

The power component may be arranged in the inner cavity of the casing 100, and the power component may include a motor 200 and a pump mechanism 300. To maintain the slender shape of the casing 100, the motor 200 and the pump mechanism 300 may be arranged in sequence along the direction of the first axis X. The motor 200 may be closer to the top end 160 (as shown in FIG. 3, the motor 200 is positioned above the pump mechanism 300) of the casing 100 than the pump mechanism 300, such that an output shaft 210 of the motor 200 can pass through the top end 160 of the casing 100 and can be communicated with the cleaning accessory 2000 (an accessory having brush bristles, such as the toothbrush head or the integrated rinsing head), to drive the cleaning accessory 2000 to move. The motor 200 may be a rotating motor 200 capable of rotating the cleaning accessory 2000, or the motor 200 may be a vibration motor 200 (such as an acoustic motor 200) capable of making the cleaning accessory 2000 swing at a higher frequency. The motor 200 may include a motor body 220 and the output shaft 210. An axis of the output shaft 210 and the first axis X of the casing 100 may coincide with each other or may be arranged at parallel intervals. The output shaft 210 may pass through the motor body 220 along its axial direction. The top end 160 of the output shaft 210 along its axial direction may pass through the top end 160 of the motor body 220 and may be connected to the cleaning accessory 2000, to drive the cleaning accessory 2000 to move.

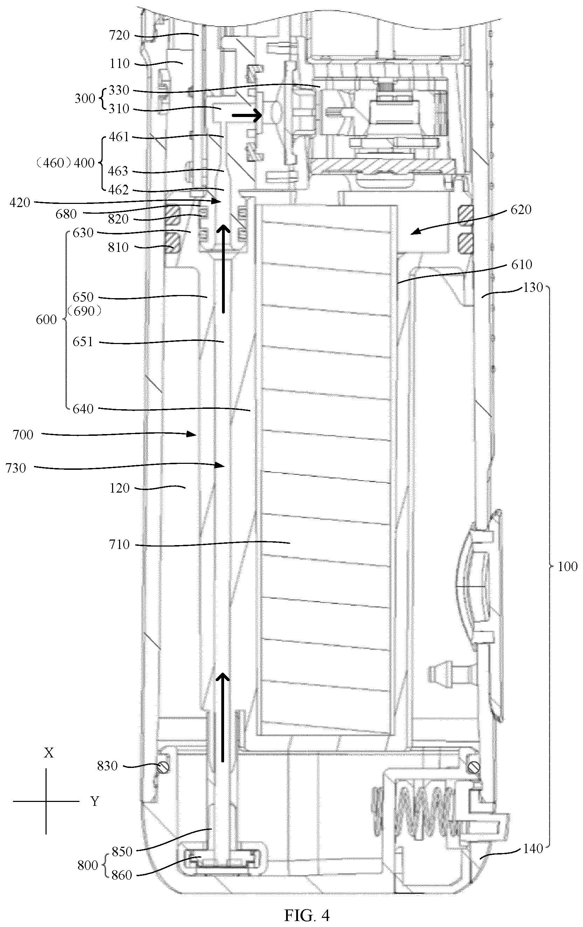

The output shaft 210 may have a first flow channel 211 that runs through the output shaft 210 along its axial direction. The inner cavity of the casing 100 may include a liquid storage cavity 120, which may be used to store a liquid. FIG. 4 is a partial view of another longitudinal profile of the oral cleaner shown in FIG. 2. Referring to FIG. 3 and FIG. 4, the connector 400 may have a second flow channel 410 and a third flow channel 420. It is to be noted that the third flow channel 420 and the second flow channel 410 are not in the same longitudinal profile, so the second flow channel 410 can be seen from the profile shown in FIG. 3, and the third flow channel 420 can be seen from FIG. 4.

The third flow channel 420 can communicate the liquid storage cavity 120 with a liquid inlet end 310 of the pump mechanism 300, and the second flow channel 410 can communicate a liquid outlet end 320 of the pump mechanism 300 with the first flow channel 211. In this way, both the second flow channel 410 and the third flow channel 420 are integrated on the connector 400, which not only reduces number of parts required for assembly and improves assembly efficiency, but also improves overall structural strength of the second flow channel 410 and the third flow channel 420 to resist the impact force of the water flow. Further, stability of connection between the liquid storage cavity 120 and the second flow channel 410, between the second flow channel 410 and the pump mechanism 300, between the pump mechanism 300 and the third flow channel 420, and between the third flow channel 420 and the first flow channel 211 of the output shaft 210 is improved to reduce the risk of liquid leakage at the connection.

The first flow channel 211 of the output shaft 210 may be communicated with the outlet 2300 through the first fluid channel 2200 of the cleaning accessory 2000 when the cleaning accessory 2000 is the accessory, such as the washing head or integrated rinsing head, which has the first fluid channel 2200 and the outlet 2300 communicated with the first fluid channel 2200 and can squirt a liquid from the outlet 2300. Arrows in FIG. 3 and FIG. 4 indicate flow directions of the liquid. Referring to the arrows in FIG. 3 and FIG. 4, when the oral cleaner realizes its rinsing function, the pump mechanism 300 can guide the liquid in the liquid storage cavity 120 to flow into a pump chamber of the pump mechanism 300 through the third flow channel 420 and the liquid inlet end 310 of the pump mechanism 300, then the liquid flows into the first flow channel 211 through the liquid outlet end 320 of the pump mechanism 300 and the second flow channel 410, and then the liquid flows out of the outlet 2300 through the first fluid channel 2200 of the cleaning accessory 2000.

Referring to FIG. 3, the power component (the motor 200 and the pump mechanism 300) and the liquid storage cavity 120 may be arranged in sequence along the direction of the first axis X (as shown in FIG. 1, the power component is positioned above the liquid storage cavity 120), to shorten the longitudinal length of the liquid storage cavity 120 to make it easier for the user to clean the water tank. Furthermore, the transverse width of the casing 100 can also be reduced, to make it easier for the user to grip. The pump mechanism 300 is closer to the liquid storage cavity 120 than the motor 200, to make it easier for the pump mechanism 300 to pump the liquid from the liquid storage cavity 120.

To increase a vertical height of the liquid storage cavity 120 to increase the volume of the liquid storage cavity 120, referring to FIG. 3 and FIG. 4, alternatively, the liquid outlet end 320 of the pump mechanism 300 can pump out the liquid along a second axis Y, and both the liquid inlet end 310 and the liquid outlet end 320 of the pump mechanism 300 may be arranged on a side of the pump mechanism 300 along a direction of the second axis Y, where the second axis Y intersects the first axis X. In this way, the length of the pump mechanism 300 in the direction of the first axis X is shortened, and the length of the liquid storage cavity 120 in the direction of the first axis X is increased, such that the volume of the liquid storage cavity 120 is increased. Further, the direction of the second axis Y is perpendicular to the direction of the first axis X. As shown in FIG. 3 and FIG. 4, the direction of the first axis X is the up-down direction, the direction of the second axis Y is a left-right direction, and both the liquid inlet end 310 and the liquid outlet end 320 of the pump mechanism 300 are arranged on a left side of the pump mechanism 300.

To efficiently use side space of the pump mechanism 300, further, the connector 400 may be connected to a side (the left side as shown in FIG. 3 and FIG. 4) of the pump mechanism 300 along the direction of the second axis Y, such that the third flow channel 420 and at least a portion of the second flow channel 410 are positioned on the side (the left side as shown in FIG. 3 and FIG. 4) of the pump mechanism 300 along the direction of the second axis Y. A connection between the connector 400 and the liquid storage cavity 120 may be positioned on the side (the left side as shown in FIG. 4) of the pump mechanism 300 along the direction of the second axis Y, to shorten the distance between the liquid inlet end 310 of the pump mechanism 300 and the liquid storage cavity 120, such that it is easier for the pump mechanism 300 to pump the liquid in the liquid storage cavity 120.

Further, in the direction of the first axis X, both the liquid inlet end 310 and the liquid outlet end 320 of the pump mechanism 300 may be closer to the liquid storage cavity 120. That is, both the liquid inlet end 310 and the liquid outlet end 320 of the pump mechanism 300 are arranged at an end of the pump mechanism 300 closer to the liquid storage cavity 120 along the direction of the first axis X. In this way, the distance between the liquid inlet end 310 of the pump mechanism 300 and the bottom of the liquid storage cavity 120 is shortened, to make it easier for the pump mechanism 300 to pump the liquid in the liquid storage cavity 120. Furthermore, the distance between the liquid outlet end 320 of the pump mechanism 300 and the first flow channel 211 is increased, to reduce the impact force of the liquid at the liquid outlet end 320 of the pump mechanism 300 against the output shaft 210 of the motor 200, thereby improving the connection stability.

The oral cleaning apparatus 1000 provided in the embodiments of the present disclosure may also include an energy source 710, which may be a device such as a rechargeable battery or accumulator battery that can supply electrical energy to the motor 200, the pump mechanism 300, and electrical devices on a circuit board 720. To maintain the slim shape of the oral cleaning apparatus 1000, the energy source 710 may be positioned on a side (a lower side as shown inFIG. 3 and FIG. 4) of the pump mechanism 300 away from the motor 200 along the direction of the first axis X. At least a portion of the energy source 710 is arranged side-by-side with at least a portion of the liquid storage cavity 120. That is, a plane projection of at least a portion of the energy source 710 along the first axis X at least partially overlaps with a plane projection of the liquid storage cavity 120 along the first axis X. That is, the energy source 710 and the liquid storage cavity 120 jointly occupy the bottom end 170 of the casing 100.

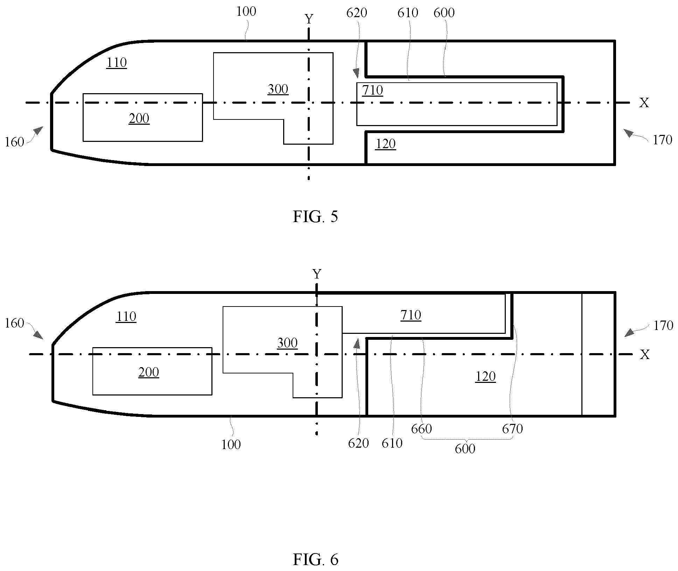

FIG. 5 is an internal layout diagram of the oral cleaning apparatus according to an embodiment of the present disclosure. Referring to FIGS. 3 to 5, as an example, the liquid storage cavity 120 may wrap on a side of the energy source 710 in a first axial direction. For example, in FIG. 5, the liquid storage cavity 120 may wrap on an outer side surface and a bottom surface of the energy source 710. That is, in the first axial direction, the energy source 710 has a top surface and the bottom surface arranged opposite to each other, and the casing 100 may have an inner top surface and an inner bottom surface arranged opposite to each other. A spacing is provided between the bottom surface of the energy source 710 and the inner bottom surface of the casing 100, and at least a portion of the liquid storage cavity is positioned between the bottom surface of the energy source 710 and the inner bottom surface of the casing 100. That is, the liquid storage cavity 120 may be concave in shape, and the energy source 710 may be positioned in a hollow of the concave liquid storage cavity 120. For another example, the liquid storage cavity 120 may only wrap on the outer side surface of the energy source 710. That is, the bottom surface of the energy source 710 is propped on the inner bottom surface of the casing 100. In other words, at least a portion of the end of the energy source 710 extending along the direction of the first axis X is wrapped by the liquid storage cavity 120.

FIG. 6 is another internal layout diagram of the oral cleaning apparatus according to an embodiment of the present disclosure. Referring to FIG. 6, as another example, a space for placing the energy source 710 is formed between the liquid storage cavity 120 and an inner shell wall of the casing 100. That is, the space for placing the energy source 710 is formed between the separator 600 and the inner shell wall of the casing 100 . For example, in FIG. 6, the liquid storage cavity 120 may wrap on the bottom surface of the energy source 710 and at least a portion of the outer side surface of the energy source 710. That is, a spacing is provided between the bottom surface of the energy source 710 and the inner bottom surface of the casing 100, and at least a portion of the liquid storage cavity is positioned between the bottom surface of the energy source 710 and the inner bottom surface of the casing 100. That is, the liquid storage cavity 120 may be L-shaped, and the energy source 710 may be positioned at a gap of the L-shaped liquid storage cavity 120. For another example, the liquid storage cavity 120 may only wrap on the outer side surface of the energy source 710. That is, the bottom surface of the energy source 710 is propped on the inner bottom surface of the casing 100.

The liquid storage cavity 120 may be formed by a shell body 130 independent of the casing 100, and the liquid storage cavity 120 may be detachably connected to the casing 100, such that the user can remove the liquid storage cavity 120 from the casing 100 to clean it. Alternatively, the liquid storage cavity 120 may be formed by the inner shell wall of the casing 100 and the separator 600. Specifically, referring toFIG. 5 and FIG. 6, the oral cleaning apparatus 1000 provided in the embodiments of the present disclosure may also include the separator 600, which may be arranged in an inner cavity of the casing 100 and can separate the inner cavity of the casing 100 into a power cavity 110 and the liquid storage cavity 120. The motor 200, the pump mechanism 300 and the energy source 710 may be arranged in the power cavity 110.

Alternatively, a plane projection of the power cavity 120 along the first axis X does not overlap, at least partially, with a plane projection of the liquid storage cavity 110 along the first axis X, or the plane projection of the liquid storage cavity 110 along the first axis X does not overlap, at least partially, with the plane projection of the power cavity 120 along the first axis X.

Alternatively, the plane projection of the power cavity 120 along the first axis X at least partially overlaps with the plane projection of the liquid storage cavity 110 along the first axis X.

In FIG. 5 and FIG. 6, the separator 600 and the inner shell wall of the casing 100 positioned on a side (the left side as shown in FIG. 5 and FIG. 6) of the separator 600 along the direction of the first axis X may enclose to form the power cavity 110, and the separator 600 and the inner shell wall of the casing 100 positioned on other side (the right side as shown in FIG. 5 and FIG. 6) of the separator 600 along the direction of the first axis X may enclose to form the liquid storage cavity 120.

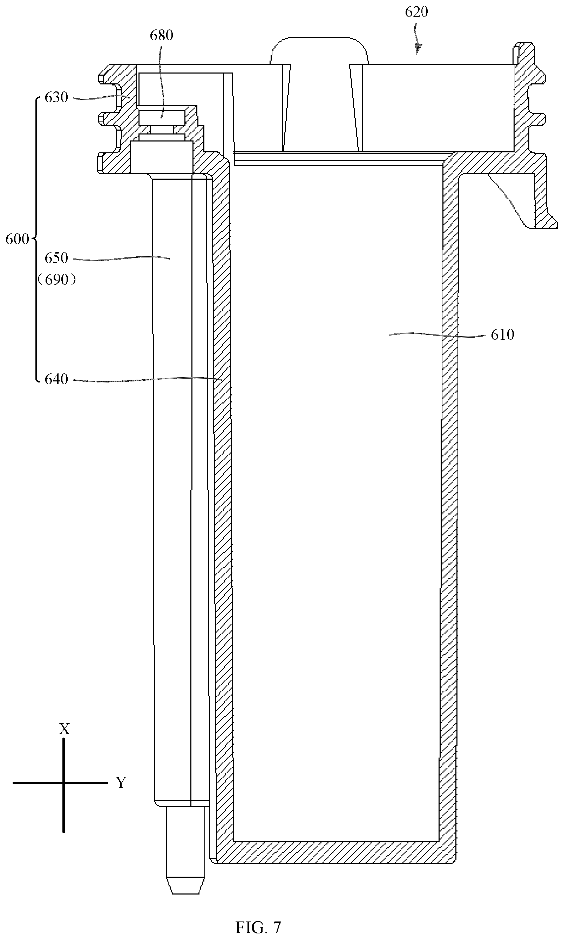

As an example, referring to FIG. 4 and FIG. 7, the separator 600 is detachably connected to the casing 100, so the user can remove the separator 600 from the casing 100 to clean it. A first sealing element 810 may be filled between the separator 600 and the casing 100 in consideration of tightness. For example, an outer sidewall of the separator 600 may be provided with a first sealing groove, and a first sealing cavity may be formed between the first sealing groove and the inner shell wall of the casing 100, where the first sealing element 810 may be a first sealing ring, which may be sealed in the first sealing cavity to prevent liquid leakage. In addition, the separator 600 may be detachably connected to the casing 100 by means of clamping connection; and/or the separator 600 is securely connected to the connector 400 (or a mounting member 500 hereinafter mentioned) by means of fasteners such as bolts. Further, connection of the fasteners may be waterproofed. For example, referring toFIG. 12, the separator 600 may have a blind hole, the connector 400 or the mounting member 500 may be provided with a threaded hole, and a first fastener 921 may pass through the blind hole of the separator 600 and is connected to the threaded hole of the connector 400 or mounting member 500 by means of thread.

As another example, the separator 600 and the casing 100 may be an integrated element formed by means of an integrated forming process to facilitate assembly and improve connection strength.

FIG. 7 is a section view of the separator 600 shown in FIG. 4. Referring to FIG. 4 and FIG. 7, to communicate the liquid inlet end 310 of the pump mechanism 300 in the power cavity 110 with the liquid storage cavity 120, the separator 600 may have an intercommunicating pore 680 communicating the power cavity 110 with the liquid storage cavity 120, and the third flow channel 420 of the connector 400 may be communicated with the liquid storage cavity 120 through the intercommunicating pore 680. To shorten the distance between the liquid inlet end 310 of the pump mechanism 300 and the liquid storage cavity 120, alternatively, the intercommunicating pore 680 may be arranged on a side (the left side as shown inFIG. 4) of the pump mechanism 300 along the direction of the second axis Y.

To avoid liquid leakage, alternatively, the connector 400 may be hermetically connected to the intercommunicating pore 680 by means of a second sealing element 820. Specifically, a second sealing groove may be provided on the outer sidewall of the connector 400, and a second sealing cavity may be formed between the second sealing groove and an inner hole wall of the intercommunicating pore 680, where the second sealing element 820 may be a second sealing ring, which may be sealed in the second sealing cavity.

The separator 600 may form an accommodating hole 620 and an accommodating chamber 610 for accommodating the energy source 710, where the accommodating hole 620 may be arranged on a side (the upper side as shown in FIG. 4 and FIG. 7) of the accommodating chamber 610 towards the pump mechanism 300 along the direction of the first axis X. As shown in FIGS. 3 to 5 and FIG. 7, the separator 600 can separately form the accommodating hole 620 and the accommodating chamber 610. Alternatively, as shown in FIG. 6, the separator 600 may form, together with the inner shell wall of the casing 100, the accommodating hole 620 and the accommodating chamber 610.

In one possible structure of the separator 600, referring to FIGS. 3 to 5 and FIG. 7, when the liquid storage cavity 120 is wrapped on a side of the energy source 710 along the direction of the first axis X, the separator 600 may include a first part 630 and a second part 640 sequentially communicated along the direction of the first axis X, and the first part 630 is closer to the pump mechanism 300 than the second part 640. An inner sidewall of the first part 630 may form the accommodating hole 620 and a portion of the accommodating chamber 610, and an inner sidewall of the second part 640 may form another portion of the accommodating chamber 610. An outer sidewall of the first part 630 and the inner shell wall of the casing 100 may match in shape, and the outer sidewall of the first part 630 is propped on the inner shell wall of the casing 100, and the first part 630 may form the intercommunicating pore 680. At least a portion of the liquid storage cavity 120 may be formed between an outer sidewall of the second part 640 and the inner shell wall of the casing 100.

For example, the liquid storage cavity 120 may be internally provided with a fourth flow channel 651 communicating the bottom of the liquid storage cavity 120 with the intercommunicating pore 680. The fourth flow channel 651 may be formed by a separate pipe body. Alternatively, the fourth flow channel 651 may be formed by the separator 600 to facilitate assembly and improve strength of connection between the fourth flow channel 651 and the intercommunicating pore 680. Specifically, referring to FIG. 4, the separator 600 may also include a third part 650, which is integrally communicated with the first part 630. The third part 650 may have a fourth flow channel 651 for liquid flow, and the fourth flow channel 651 may communicate the intercommunicating pore 680 with a side of the liquid storage cavity 120 away from the pump mechanism 300. Further, the fourth flow channel 651 may extend along the direction of the first axis X to reduce the length of the waterway between the liquid inlet end 310 of the pump mechanism 300 and the side of the liquid storage cavity 120 away from the pump mechanism 300.

In another possible structure of the separator 600, referring toFIG. 6, when space for placing the energy source 710 is formed between the liquid storage cavity 120 and the inner shell wall of the casing 100, the separator 600 may include a fourth part 660, which may extend along the direction of the first axis X . At least a portion of the liquid storage cavity 120 may be formed between the fourth part 660 and a portion of the inner shell wall of the casing 100, and at least a portion of the accommodating chamber 610 may be formed between the fourth part 660 and another portion of the inner shell wall of the casing 100.

Further, the separator 600 may also include a fifth part 670, where the fifth part 670 may be connected between the fourth part 660 and the inner shell wall of the casing 100, and the fifth part 670 may provide support to the energy source 710 in the direction of the first axis X.

Referring to FIG. 1, the water tank of the related oral cleaner generally is provided with an air vent. When the pump mechanism 300 is pumping water, the air vent may allow air to flow into the water tank and fill space of liquid loss, to ensure that the inner cavity of the water tank is communicated with outside world. Beauty of the oral cleaning apparatus 1000 is adversely affected if the related air vent is exposed. In addition, when the user holds the body, there may be a risk of blocking the air vent, which may adversely affect operation of the water pump. Furthermore, when the air vent is designed inside the body, it is required to additionally provided air vent pipelines in the inner cavity, which increases design difficulty.

In view of the above technical problems, the inventor of the present disclosure thinks of an idea of splitting the body into two parts that may be nested with each other to communicate the inner cavity of the water tank with the outside world by means of a fit-up gap between the two parts. In this way, beauty of the apparatus may be realized because it is non-porous in appearance. However, it is difficult to accurately control the fit-up gap. Some products on a same production line have a larger fit-up gap and thus have a risk of liquid leakage, and some products have a smaller fit-up gap, which makes it difficult for external gas to pass through. On this basis, the inventor of the present disclosure proposes to form a microchannel between mating surfaces of the two parts, where a cross section of the microchannel may be set to be smaller, such that it can allow the gas to flow and prevent the liquid from flowing out. The fit-up gap may be made slightly larger, such that it is easy for the external gas to pass through, and also it is easy to ensure that there is little difference between the fit-up gaps of the products on the same production line.

Specifically, referring to FIG. 3, the casing 100 may include a shell body 130 and a cover body 140. The shell body 130 may include a top wall and a sidewall, where the sidewall of the shell body 130 may be connected to an outer perimeter of the top wall of the shell body 130 and may extend along the direction of the first axis X. The top wall of the shell body 130 may have a through hole 530 for the output shaft 210 of the motor 200 to pass through. The shell body 130 may have an opening, which may be arranged, as shown in FIG. 3, at one end of the shell body 130 along the direction of the first axis X and may be arranged opposite to the top wall of the shell body 130. Alternatively, the opening may be arranged on the sidewall of the shell body 130.

The cover body 140 can cover the opening of the shell body 130, such that the shell body 130 and the cover body 140 may enclose to form the inner cavity of the shell. The cover body 140 and the shell body 130 may be nested with each other along a preset direction. The preset direction may be the direction of the first axis X, or the preset direction may intersect the direction of the first axis X.

Specifically, the cover body 140 may include a bottom wall and a sidewall, where the sidewall of the cover body 140 may be connected to an outer periphery of the bottom wall of the cover body 140 and may extend along a certain direction, and the sidewall and the bottom wall of the cover body 140 may form an inner cavity of the cover body 140 having an opening at one end. The sidewall of the cover body 140 may be embedded, as shown in FIG. 3, in the inner cavity of the shell body 130, or the sidewall of the cover body 140 may be sleeved on an outer side of the shell body 130. In addition, the cover body 140 and the shell body 130 may form at least a portion of the liquid storage cavity 120.

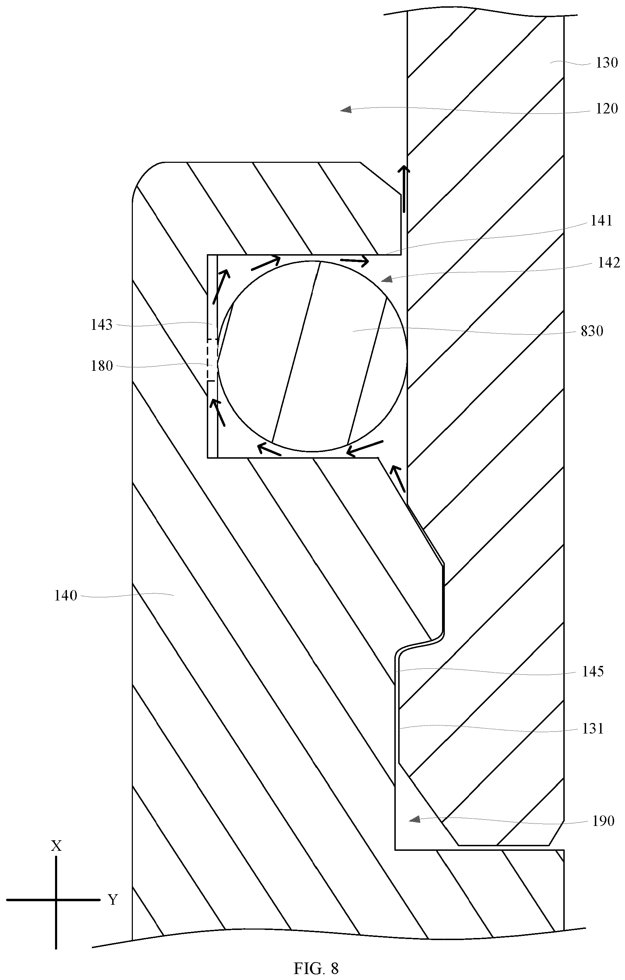

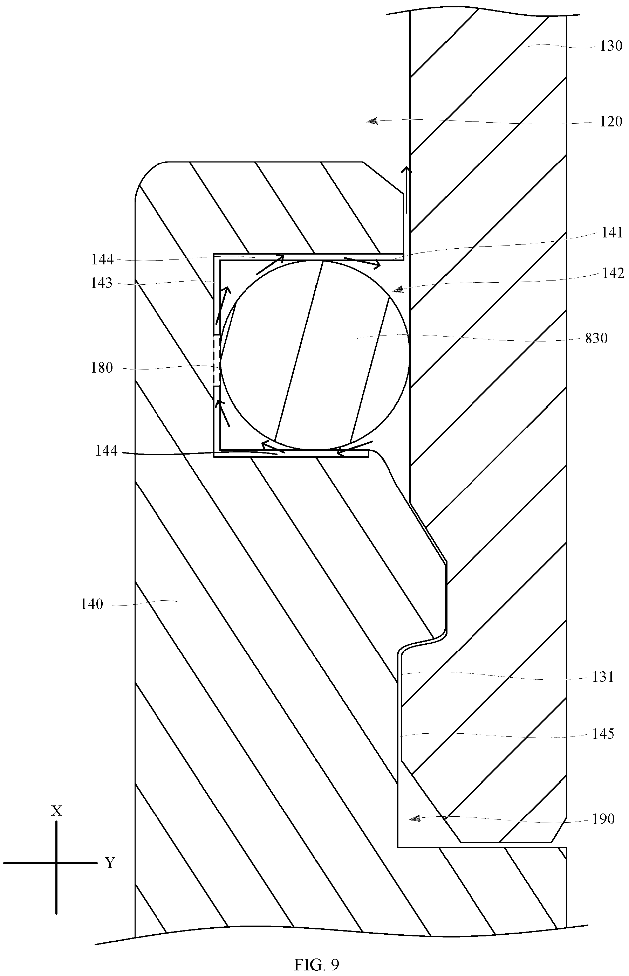

With reference to FIG. 8 and FIG. 9, the cover body 140 may have a first mating surface 145, the shell body 130 may have a second mating surface 131 arranged opposite to the first mating surface 145, and a fit-up gap 190 may be formed between the first mating surface 145 and the second mating surface 131. For example, in FIG. 3, the cover body 140 may be embedded in the inner cavity of the shell body 130, where an outer side surface of the cover body 140 embedded in the shell body 130 may be the first mating surface 145, and an outer side surface of the shell body 130 sleeved on the outer side of the cover body 140 may be the second mating surface 131. For another example, the cover body 140 may be sleeved on the outer side of the shell body 130, an inner side surface of the cover body 140 may be the first mating surface 145, and an outer side surface of the shell body 130 may be the second mating surface 131. In this way, a flow channel of a gas may be hidden inside the apparatus to avoid blocking the flow channel of the gas, which has the advantages of easy for gas ventilation and non-porous in appearance.

In addition, a microchannel 180 may be formed between the shell body 130 and the cover body 140. The microchannel 180 can allow the gas to pass through along the direction of the first axis X and obstruct the liquid from flowing out, and the microchannel 180 communicates the liquid storage cavity 120 with the outside world by means of the fit-up gap 190 between the shell body 130 and the cover body 140. Alternatively, the liquid storage cavity 120 may be higher than the microchannel 180 along the preset direction. In this way, a water level in the liquid storage cavity 120 may be higher than the microchannel 180.

Specifically, the liquid level in the liquid storage cavity 120 may be higher than the microchannel 180, such that a pressure difference is created between external pressure (one bar) and gas pressure (less than one bar) inside the liquid storage cavity 120. Under the action of the pressure difference, the gas can be allowed to flow and the liquid can be prevented from flowing out to achieve the objective of gas ventilation and leakage prevention. It is worth noting that "the liquid can be prevented from flowing out" mentioned above may be understood in a broad sense, which means that when the oral cleaning apparatus 1000 is in a static state or the user normally grips it, the microchannel 180 can prevent the liquid from flowing out. However, when the user shakes the oral cleaning apparatus vigorously, surface tension may be broken, which may affect the gas pressure, such that the liquid may leak out of the microchannel 180.

It is described below with reference to FIG. 8 and FIG. 9 how the microchannel 180 is formed. Specifically, a sidewall of either one of the shell body 130 and the cover body 140 may be provided with a third sealing groove 141, and the third sealing groove 141 may have an opening facing toward the outer side. A sidewall of the other one of the shell body 130 and the cover body 140 may enclose, together with the third sealing groove 141, to form a third sealing cavity 142, where the third sealing cavity 142 may communicate the liquid storage cavity 120 with the outside world by means of the fit-up gap 190. A groove bottom of the third sealing groove 141 may be provided with an airflow groove 143, which may have an opening facing towards the third sealing cavity 142.

For example, in FIG. 8 and FIG. 9, the cover body 140 is embedded in the inner cavity of the shell body 130, and the sidewall of the cover body 140 may be provided with the third sealing groove 141, which may have an opening facing towards the outer side. The sidewall of the shell body 130 may enclose, together with the third sealing groove 141, to form the third sealing cavity 142. For another example, the cover body 140 may be sleeved on the outer side of the shell body 130, and the sidewall of the shell body 130 may be provided with the third sealing groove 141, which may have an opening facing towards the outer side. The sidewall of the cover body 140 may enclose, together with the third sealing groove 141, to form the third sealing cavity 142.

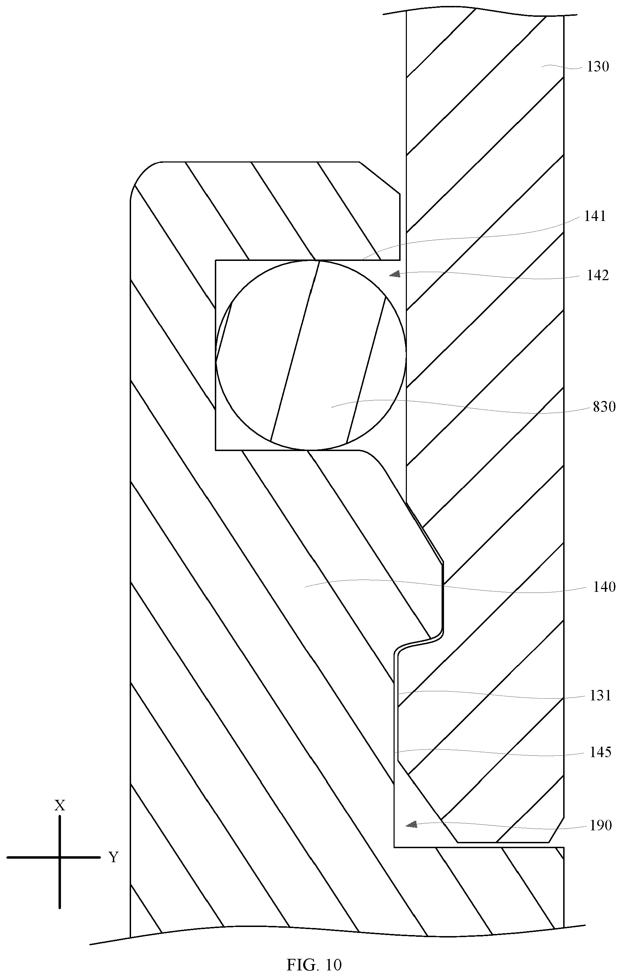

FIG. 10 is a partial section view of the casing 100 at a non-airflow groove 143 according to an embodiment of the present disclosure. With reference to FIG. 10, the casing 100 may also include a third sealing element 830, which may be clamped between the inner sidewall of the other one of the shell body 130 and the cover body 140 and the groove bottom of the third sealing groove 141. A cross-section shape of the third sealing element 830 may be a circle, a polygon, and so on, but not limited thereto.

With continued reference to FIG. 8 and FIG. 9, the microchannel 180 is formed between a surface of the third sealing element 830 close to the airflow groove 143 and the airflow groove 143. Thus, the sealing cavity is sealed by the third sealing element 830 at the non-airflow groove 143. At the airflow groove 143, a microchannel 180 is formed, which can allow the gas to flow through and prevent the liquid from flowing through. A machining depth of the airflow groove 143 is generally more accurate, such that a size of the microchannel 180 formed may be precisely controlled. Thus, the casing 100 provided in the embodiment of the present disclosure not only can achieve gas ventilation and liquid barrier, but also has a high yield. In addition, when the pump mechanism 300 pumps the liquid, the third sealing element 830 may be subjected to extruding deformation, making the fit-up gap 190 larger, which is more conducive to achieving the effect of air intake.

A liquid level difference h formed between a highest liquid level height of the liquid storage cavity 120 and a height of a horizontal plane of the airflow groove 143 meets 0<ρ*g*h≤30%*Po, where ρ represents air density, g represents liquid density, and Po represents one bar atmospheric pressure. The ρ represents air density, g represents liquid density, and Po represents one bar atmospheric pressure.

Specifically, the greater the difference between the liquid pressure inside the liquid storage cavity 120 and the external atmospheric pressure is, the more easily the gas can flow from the outside world to the liquid storage cavity 120, and the more likely the liquid leakage can be avoided. On the contrary, the smaller the difference between the liquid pressure inside the liquid storage cavity 120 and the external atmospheric pressure is, the less easily the gas can flow from the outside world to the liquid storage cavity 120, and the more likely the liquid leakage may occur. As verified by the inventor of the present disclosure, the microchannel 180 can allow the gas to pass through and prevent the liquid from flowing out when the liquid level difference h meets the above conditions.

To further prevent the liquid leakage, the liquid level difference h may meet 0<ρ*g*h≤20%*Po; and to still further prevent the liquid leakage, the liquid level difference h may meet 0<ρ*g*h≤10%*Po. For example, ρ*g*h≤10%*Po, ρ*g*h≤5%*Po, and ρ*g*h≤1%*Po.

Further, the depth of the airflow groove 143 may range between 0.1 mm and 0.4 mm, such that the liquid can be prevented from flowing through while the gas passes through. For example, the depth of the airflow groove 143 may be 0.1 mm, 0.3 mm, and 0.4 mm, etc. Further, the depth of the airflow groove 143 may range between 0.25 mm and 0.34 mm, to further achieve gas ventilation and liquid barrier. For example, the depth of the airflow groove 143 may be 0.25 mm, 0.30 mm, and 0.34 mm, etc.

In the preset direction, the third sealing groove 141 may have two groove sidewalls arranged opposite to each other, as shown in FIG. 8 and FIG. 9, where a groove bottom wall of the third sealing groove 141 may be connected between the two groove sidewalls. Alternatively, the third sealing groove 141 may have a first groove sidewall, which may be used to support one side of the third sealing element 830.

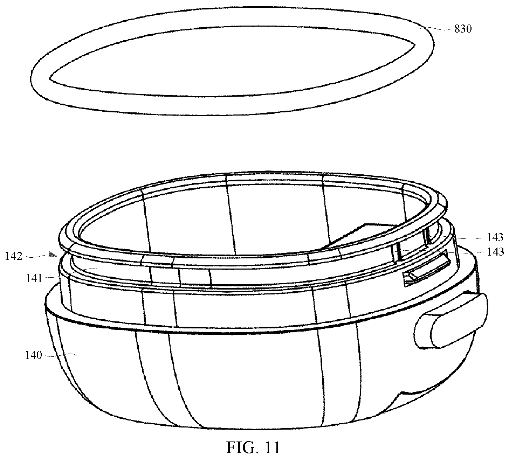

When the third sealing element 830 has two groove sidewalls, to allow the gas in the third sealing cavity 142 to flow in or out, as an example, referring to FIG. 8, a height of the third sealing element 830 may be less than that of the groove bottom wall in the preset direction. Thus, a channel communicated with the microchannel 180 may be formed between the third sealing element 830 and one of the groove sidewalls, and another channel communicated with the microchannel 180 may also be formed between the third sealing element 830 and the other groove sidewall. Thus, the gas entering the third sealing cavity 142 may flow around the third sealing element 830 at least half a cycle as marked by arrows shown inFIG. 8, and then flow out of the third sealing cavity 142. Further, the airflow groove 143 may run through the groove bottom wall along the preset direction, as shown in FIG. 11.

As another example, referring to FIG. 9, each of the two inner sidewalls may be provided with a flow guide groove 144, the flow guide groove 144 may have an opening facing towards the third sealing cavity 142, and a channel for the gas to flow through may be formed between the flow guide groove 144 and the third sealing element 830, where the channel is communicated with the microchannel 180. The gas entering the third sealing cavity 142 flows, through the channel and the microchannel 180, around the third sealing element 830 at least half a cycle as marked by arrows shown in FIG. 9, and then flows out of the third sealing cavity 142. Further, the flow guide groove 144 may run through the groove sidewall along a direction perpendicular to the groove bottom wall.

Similarly, when the third sealing element 830 has one groove sidewall, inflow and outflow of the gas in the third sealing cavity 142 may be achieved by reducing the height of the third sealing element 830 or by providing the flow guide groove 144 on the groove sidewall.

Alternatively, referring to FIG. 11, a circumferential length of the airflow groove 143 is shorter than that of the sealing groove. There may be one or more airflow grooves 143. When there are a plurality of airflow grooves 143, the plurality of airflow grooves 143 may be arranged at intervals.

Alternatively, the cover body 140 is detachably connected to the shell body 130, such that when the liquid needs to be drained from the liquid storage cavity 120, the cover body 140 may be dismantled from the shell body 130 to achieve the objective of rapid liquid drainage.

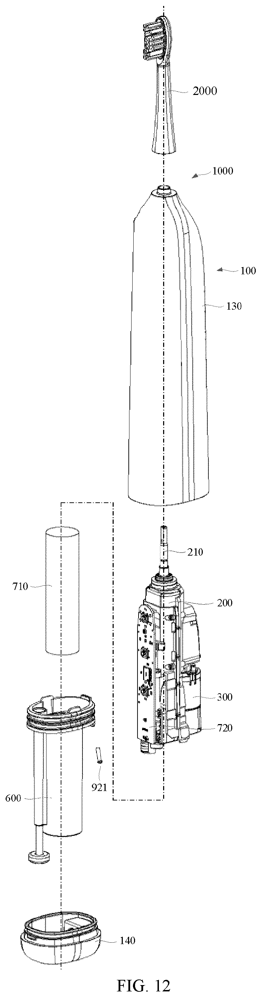

FIG. 12 is an exploded view of the oral cleaner according to an embodiment of the present disclosure. With reference to FIG. 12, the oral cleaner provided in the embodiment of the present disclosure may also include a mounting member 500. To facilitate assembly, the mounting member 500 is fixed to the inner shell wall of the casing 100, and both the motor 200 and the pump mechanism 300 may be mounted in the mounting member 500. Thus, during the assembly, the motor 200 and the pump mechanism 300 may be first assembled on the mounting member 500, and then they are mounted as one assembly into the casing 100.

It is to be noted that both the motor 200 and the pump mechanism 300 may vibrate during operation, which leads to poor reliability of connection between pipelines connecting the liquid outlet end 320 of the pump mechanism 300 and the first flow channel 211 of the output shaft 210, making them easy to fall off. In view of the above problems, the inventor of the present disclosure thinks of an idea of disassembling the pump mechanism 300 into a power end 330, the liquid inlet end 310 and the liquid outlet end 320, and integrating the liquid outlet end 320 onto the connector 400 and the mounting member 500 to reduce sympathetic vibration. In this way, reliability of the connection between the second flow channel 410 of the connector 400 and the liquid outlet end 320 of the pump mechanism 300 is improved.

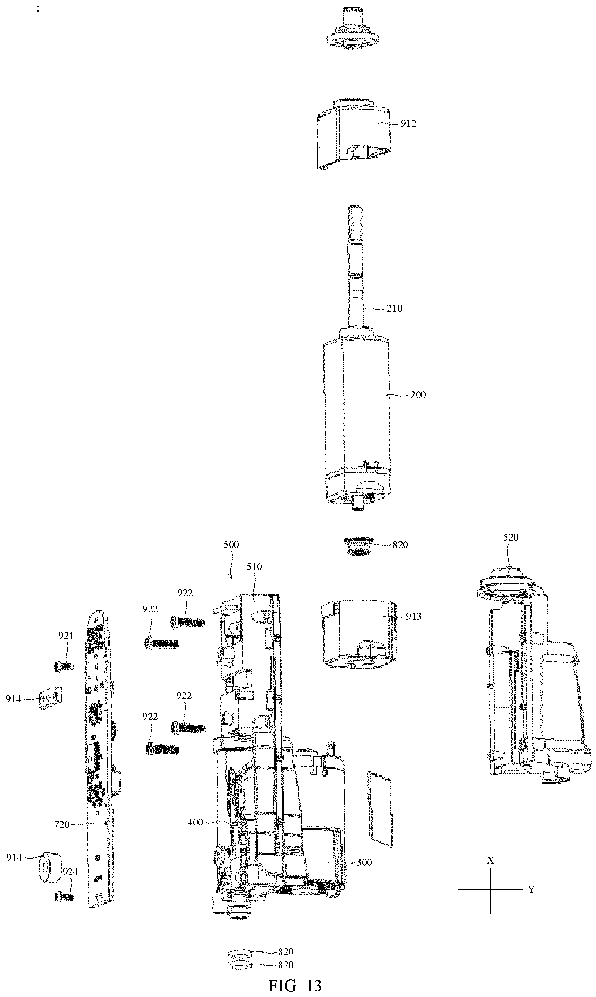

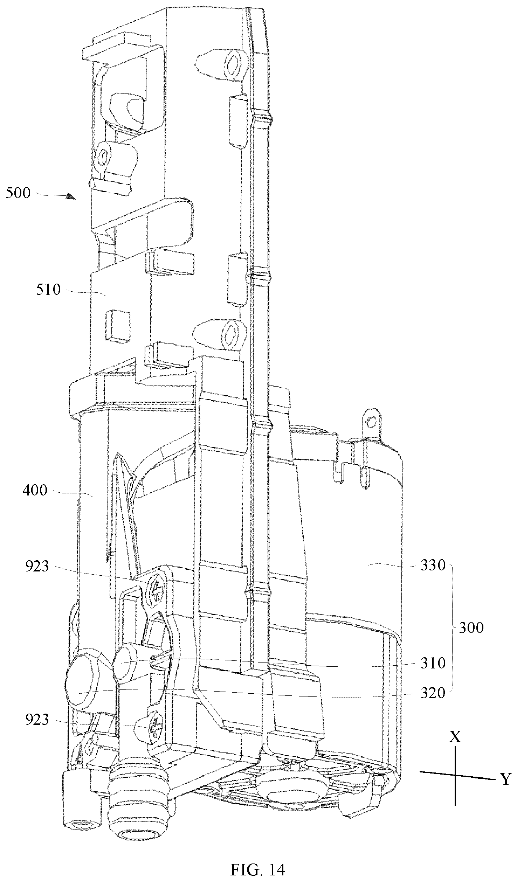

Specifically, referring to FIGS. 13 to 16, a second valve part 321 of the liquid outlet end 320 may be integrated onto the mounting member 500, and a second end cover part 322 of the liquid outlet end 320 may be integrated onto the connector 400. The power end 330, at least a portion of the connector 400, and at least a portion of the mounting member 500 may be arranged sequentially along a liquid discharge direction (the direction of the second axis Y) of the liquid outlet end 320, and may be connected by means of a third fastener 923. Thus, the mounting member 500 is separated between the connector 400 and the power end 330 of the pump mechanism 300, such that most of vibrations of the pump body is transmitted to the mounting member 500. A vibration damper may be arranged between the mounting member 500 and the inner shell wall of the casing 100, and the vibration of the mounting member 500 may be eliminated through vibration damping connection, such that the vibration transmitted from the power end 330 of the pump mechanism 300 to the connector 400 is so little that adverse impact of the vibration of the power end 330 of the pump mechanism 300 on the connector 400 is reduced. Thus, the reliability of connection between the second flow channel 410 of the connector 400 and the liquid outlet end 320 of the pump mechanism 300 is improved. In addition, the liquid outlet end 320 is integrated onto the mounting member 500 and the connector 400, which is not only convenient for assembly, but also has shorter waterways and higher connection reliability.

Alternatively, the power end 330 may include a pump housing 331 and a piston 332, where one end of the pump housing 331 may have an opening. The mounting member 500 can seal the opening, and the mounting member 500 and the pump housing 331 may enclose to form the pump chamber of the pump mechanism 300 for reciprocating movement of the piston 332 along a liquid discharge direction of the liquid outlet end 320. The mounting member 500 may have a liquid outlet hole penetrating through the mounting member 500 and communicated with the pump chamber of the pump mechanism 300, the second valve part 321 of the liquid outlet end 320 is arranged in the liquid outlet hole, and the second valve part 321 of the liquid outlet end 320 can allow the liquid to be pumped out of the pump chamber through the liquid outlet hole and prevent the liquid from flowing into the pump chamber through the liquid outlet hole.

Specifically, the reciprocating movement of the piston 332 in the pump chamber may enable the liquid in the pump chamber to be pumped out of the liquid outlet hole. The valve at the liquid outlet end 320 has unidirectional continuity, to prevent the liquid from flowing back to the pump chamber through the liquid outlet hole. In this solution, the pump chamber and the liquid outlet hole are formed by means of the mounting member 500 to realize the objective of integrating the valve part of the liquid outlet end 320.

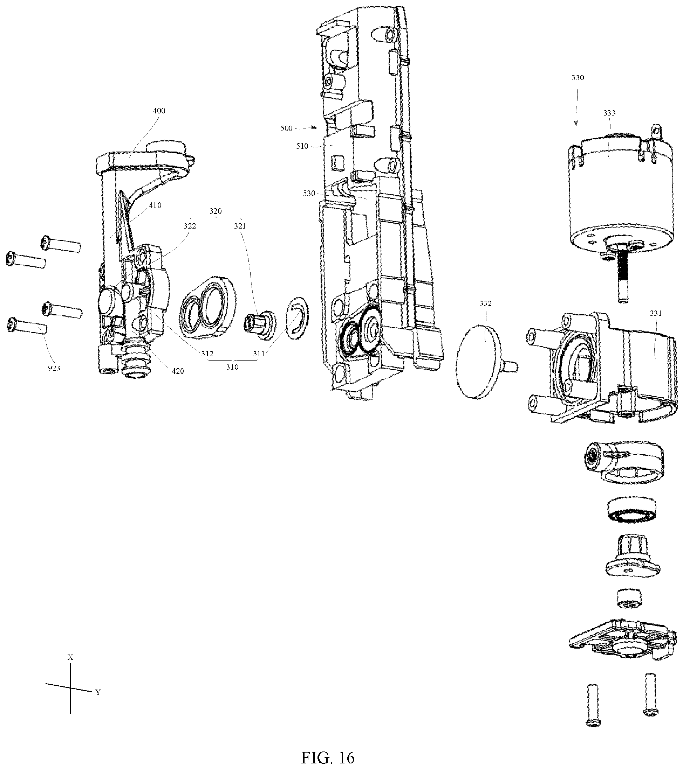

Alternatively, referring to FIG. 16, the power end 330 may also include a driving member 333, which may have a drive shaft rotating with respect to the pump housing 331. The drive shaft can drive an eccentric wheel to rotate with respect to the pump housing 331, and the eccentric wheel can touch the piston 332 to carry out a reciprocating movement.

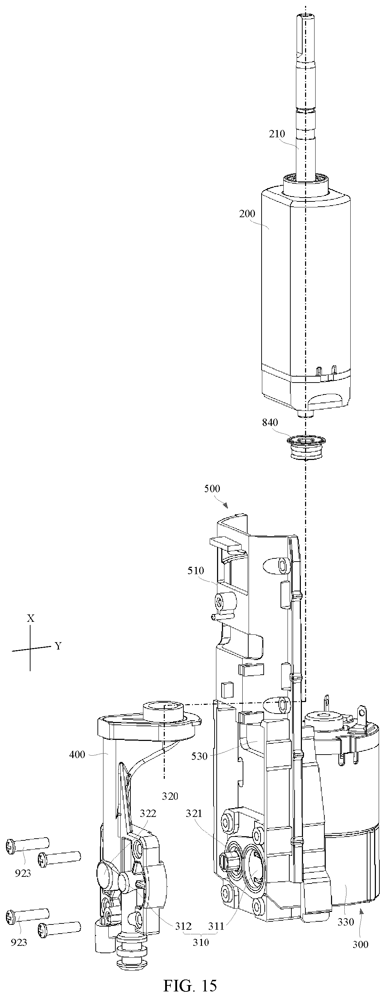

With reference to FIGS. 15 to 17, alternatively, at least a portion of the connector 400 and the second end cover part 322 of the liquid outlet end 320 may be fabricated into an integrated element by means of an integrated forming process. The second end cover part 322 of the liquid outlet end 320 may cover the liquid outlet hole, and the second end cover part 322 of the liquid outlet end 320 may form a liquid outlet flow channel communicating the liquid outlet hole with the second flow channel 410.

Specifically, a liquid outlet channel of the second end cover part 322 of the liquid outlet end 320 can guide a flow direction of the liquid flowing out of the liquid outlet hole. In this solution, the connector 400 and the second end cover part 322 of the liquid outlet end 320 are fabricated into the integrated element, such that the liquid outlet channel and the second flow channel 410 are integrated, which is conducive to improving the connection reliability, improving smoothness of liquid flow, and improving convenience of assembly.

Alternatively, the mounting member 500 may have a liquid outlet hole penetrating through the mounting member 500 and communicated with the pump chamber of the pump mechanism 300. The first valve part 311 of the liquid inlet end 310 may be arranged in the liquid inlet hole, and the first valve part 311 of the liquid inlet end 310 can allow the liquid to be pumped into the pump chamber through the liquid inlet hole and prevent the liquid from flowing out through the liquid inlet hole.

Specifically, the reciprocating movement of the piston 332 in the pump chamber may enable the liquid to be pumped into the pump chamber through the liquid inlet hole. The valve at the liquid inlet end 310 has unidirectional continuity, to prevent the liquid from flowing out through the liquid inlet hole. In this solution, the pump chamber and the liquid inlet hole are formed by means of the mounting member 500 to realize the objective of integrating the first valve part 311 of the liquid inlet end 310.

Alternatively, at least a portion of the connector 400 and the first end cover part 312 of the liquid inlet end 310 may be fabricated into an integrated element by means of an integrated forming process. The first end cover part 312 of the liquid inlet end 310 may cover the liquid inlet hole, and the first end cover part 312 of the liquid inlet end 310 may form a liquid inlet flow channel communicated with the liquid inlet hole, where the liquid inlet flow channel may be communicated with the third flow channel 420 of the connector 400. Thus, the liquid inlet channel of the first end cover part 312 of the liquid inlet end 310 can guide the flow direction of the liquid flowing into the liquid inlet hole. In this solution, the connector 400 and the first end cover part 312 of the liquid inlet end 310 are fabricated into an integrated element, such that the liquid inlet channel and the third flow channel 420 are integrated, which is conducive to improving the connection reliability, improving the smoothness of liquid flow, and improving the convenience of assembly.

Referring to FIGS. 13 to 16, alternatively, the mounting member 500 may include a first mounting part 510. The first mounting part 510 may have a first side and a second side arranged opposite to each other along the liquid discharge direction of the liquid outlet end 320. The motor 200 and the power end 330 of the pump mechanism 300 may be arranged on the first side of the first mounting part 510 at intervals along the axial direction of the output shaft 210. A portion of the connector 400, into which the second end cover part 322 of the liquid outlet end 320 is integrated, may be arranged on the second side of the first mounting part 510. The mounting member 500 may have a through hole 530 for allowing the connector 400 to pass through and limiting the connector 400 to be on at least one side along the axial direction of the output shaft 210. Thus, the connector 400 may be restricted by the through hole 530 to provide upward support and limit for the connector 400, thereby avoiding the connector 400 from vibrating up and down. Alternatively, the circuit board 720 may be mounted on a side of the first mounting part 510 away from the motor 200 by means of the fourth fastener 924. A fourth vibration damper 914 may be arranged between the circuit board 720 and the inner shell wall of the casing 100.

With reference to FIG. 12 and FIG. 13, alternatively, the mounting member 500 may also include a second mounting part 520. The second mounting part 520 may be in an involutory connection to the first side of the first mounting part 510, and the second mounting part 520 and the first mounting part 510 may enclose to form accommodation space for wrapping the outer side surface of the motor 200. In this way, the mounting member 500 is wrapped on the outer side surface of the motor 200, such that most of the vibrations of the motor 200 is transmitted to the mounting member 500, such that the vibration transmitted from the motor 200 to the connector 400 is so little that adverse impact of the vibration of the power end 330 of the motor 200 on the connector 400 is reduced. Thus, the reliability of connection between the second flow channel 410 of the connector 400 and the first flow channel 211 of the motor 200 is improved. Alternatively, referring toFIG. 13, the first mounting part 510 and the second mounting part 520 may be securely connected by means of a second fastener 922.

Alternatively, a vibration damper is sandwiched between the first mounting part 510 and the outer side surface of the motor 200; and/or the vibration damper is sandwiched between the second mounting part 520 and the outer side surface of the motor 200. In this way, vibration transmission between the motor 200 and the mounting member 500 may be reduced by means of the vibration damper. For example, in FIG. 13, a second vibration damper 912 is sandwiched between a front end of the motor 200 and the mounting member 500, and a third vibration damper 913 is sandwiched between a rear end of the motor 200 and the mounting member 500.

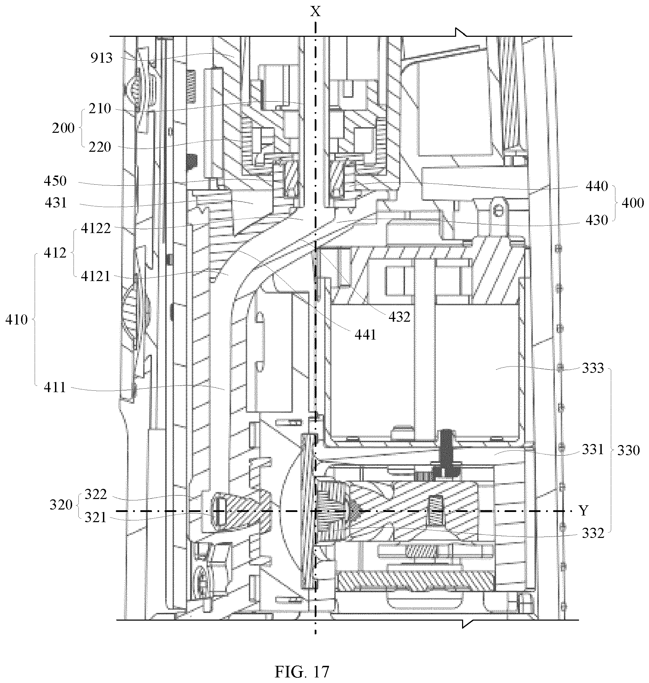

With reference to FIG. 17, alternatively, the connector 400 may have a mounting groove 450 for penetration by the output shaft 210 of the motor 200, and a fourth sealing element 840 may be filled between an inner groove wall of the mounting groove 450 and the output shaft 210 of the motor 200. Specifically, the first flow channel 211 of the output shaft 210 may be communicated, at the mounting groove 450, with the second flow channel 410 of the connector 400. Arrangement of the sealing element can prevent liquid leakage at the connection.

With continued reference to FIG. 17, alternatively, the motor 200 may include the motor body 220 and the output shaft 210. The output shaft 210 of the motor 200 may pass through the motor body 220, and two ends of the output shaft 210 along its axial direction may penetrate through the motor body 220. The bottom surface of the motor body 220 and the inner groove wall of the mounting groove 450 may enclose to form a confining space for confining the fourth sealing element 840. The confining space can confine two ends of the fourth sealing element 840 along the axial direction of the output shaft 210. Thus, the fourth sealing element 840 may be restricted by the bottom surface of the motor body 220 of the motor 200 and the groove bottom wall of the mounting groove 450, to prevent the fourth sealing element 840 from moving with vibration.

With reference to FIG. 17, the second flow channel 410 may include a first flow segment 411 and a second flow segment 412 communicated sequentially. The first flow segment 411 is communicated with the liquid outlet end 320 and may extend along the direction of the first axis X, and a spacing is provided between the first flow segment 411 and the first flow channel 211 along the direction of the second axis. The second flow segment 412 may communicate the first flow segment 411 with the first flow channel 211, and the second flow segment 412 may include the first arc segment 4121, where circular arc transition is achieved between the first arc segment 4121 and the first flow segment 411. Use of the circular arc transition can reduce resistance of an inner wall of the flow channel to the liquid, which is conducive to flow of the liquid.

Further, the first arc segment 4121 may be higher than the pump mechanism 300, and the first arc segment 4121 may have an arc center facing toward the pump mechanism 300, such that the liquid flows more gently toward the first flow channel 211 to further reduce the resistance of the inner wall of the flow channel to the liquid.

Alternatively, the second flow segment 412 also includes a second arc segment 4122, where circular arc transition is achieved between the second arc segment 4122 and the first flow channel 211. Use of the circular arc transition can reduce the resistance of the inner wall of the flow channel to the liquid, which is conducive to flow of the liquid.

Further, the second arc segment 4122 has an arc center facing toward the motor 200 such that the second arc segment 4122 smoothly borders with the first flow channel 211, which is conducive to flow of the liquid.

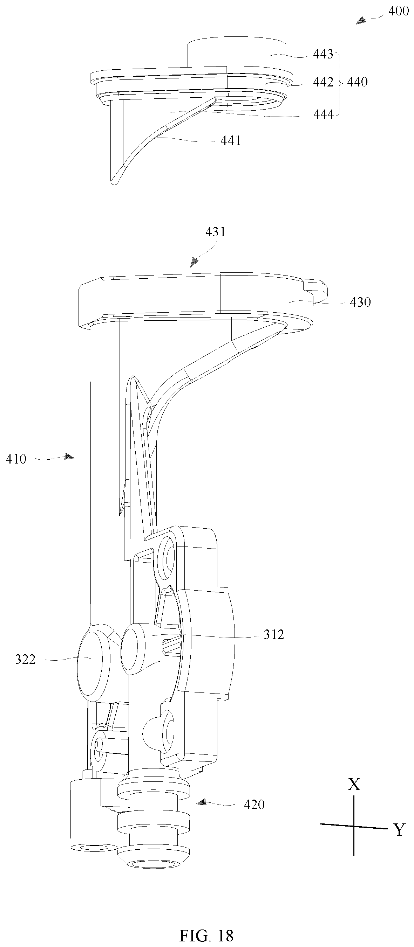

With reference to FIG. 17 and FIG. 18, alternatively, the connector 400 may include a first connecting part 430 and a second connecting part 440 connected to each other. The first connecting part 430 may have the first flow segment 411 and a reversing chamber 431 communicated with the first flow segment 411, where the reversing chamber 431 may have a first intrados 432, and the reversing chamber 431 may have an opening along the direction of the first axis X. At least a portion of the second connecting part 440 may be internally mounted in the reversing chamber 431 through the opening of the reversing chamber 431 and may have a second intrados 441. The first intrados 432 and the second intrados 441 may enclose to form the second flow segment 412.

Specifically, the second connecting part 440 may include a cover plate segment 442, a convex segment 443, and a baffle segment 444. The convex segment 443 and the baffle segment 444 may be connected to two sides of the cover plate segment 442 along the direction of the first axis X, respectively. The cover plate segment 442 may cover the reversing chamber 431, and the baffle segment 444 may be positioned in the reversing chamber 431 and may have the second intrados 441. The cover plate segment 442 may be provided with a via hole, the convex segment 443 may surround an outer side of the via hole, and an inner cavity of the convex segment 443 may be communicated with the via hole. The output shaft 210 may pass through the inner cavity of the convex segment 443 and the via hole, and the fourth sealing element 840 is arranged between the output shaft 210 and an inner cavity wall of the convex segment 443. Thus, the convex segment 443 and a portion of the cover plate segment 442 may form the mounting groove 450 mentioned above.

As described in the background technology, the oral cleaners in the related technologies have a problem of higher power consumption and shorter endurance of the water pump. Based on inventor' research, it is found that reasons for this problem are as follows.

Based on influences of the diameter on pressure at a water outlet of the pump mechanism 300, the smaller the diameter (i.e. inner diameter) of the liquid inlet flow channel of the pump mechanism 300 is, the greater the resistance is, and thus the pump mechanism 300 needs to overcome greater resistance to pump the liquid into the pump chamber. Less water is pumped into the pump chamber, so efficiency of the pump mechanism 300 is decreased, and water pressure and flow rate at the water outlet is lower. In severe cases, this may cause cavitation erosion or even damage to the pump mechanism 300, and the impact force is not enough to clean the oral cavity. In addition, the larger the diameter (i.e. the inner diameter) of the liquid inlet flow channel of the pump mechanism 300 is, the smaller the resistance is, and thus the pump mechanism 300 needs to overcome smaller resistance, so it is easy to pump the liquid into the pump chamber. In this case, there is more water in the pump chamber, which increases the load and the required power consumption. Moreover, the large amount of water consumed leads to waste of water resources. Therefore, choosing the appropriate inner diameter of the liquid inlet flow channel is crucial for performance of the pump mechanism 300.

Similarly, the diameter of the liquid outlet flow channel also has an impact on liquid outlet pressure of the pump mechanism 300. The smaller the inner diameter of the liquid outlet flow channel is, the greater the resistance is, and thus the pump mechanism 300 needs to overcome greater resistance to pump the liquid out, which may result in increase in power consumption and decrease in efficiency of the driving member 333 of the pump mechanism 300. In addition, the larger the inner diameter of the liquid outlet flow channel of the pump mechanism 300 is, the smaller the resistance is, and thus the pump mechanism 300 needs to overcome smaller resistance. In this case, the pressure at the liquid outlet end 320 of the pump mechanism 300 rises because the loss along the pipeline is reduced. Therefore, choosing the appropriate inner diameter of the liquid outlet flow channel is crucial for the performance of the pump mechanism 300.

Similarly, the diameter of the cleaning accessory 2000 also has an impact on the liquid outlet pressure of the pump mechanism 300. The smaller the inner diameter of an ejector flow channel in the cleaning accessory 2000 is, the greater the resistance is, and thus the pump mechanism 300 needs to overcome greater resistance to pump the liquid out of the cleaning accessory 2000 to form liquid impact, which may increase the power consumption and decrease the efficiency of the driving member 333 of the pump mechanism 300. In addition, the larger the inner diameter of the ejector flow channel is, the smaller the resistance is, and thus the pump mechanism 300 needs to overcome smaller resistance. In this case, the pressure at the liquid outlet end 320 of the pump mechanism 300 rises because the loss along the pipeline is reduced. Therefore, choosing the appropriate inner diameter of the ejector flow channel is crucial for the performance of the pump mechanism 300.

In the embodiments of the present disclosure, the driving member 333 of the pump mechanism 300 may be a four-pole six-slot motor, which may be a brushed motor having an outer diameter of Ø22 mm and an ironclad length of 17 mm (of course an equal-sized or smaller brushless motor or other driver may also be used), and such a small-sized motor is demanding for power consumption requirements. However, excessive power consumption may increase temperature rise of the motor, shorten lifespan, and reduce the performance.

In response to the above technical problems, using a pipeline pressure drop formula ΔP=(1/2)f×L/D×ρ×v^2 (the pipeline pressure drop is related to fluid channel length L, diameter D, frictional resistance coefficient f, liquid density ρ, and average flow velocity v of the liquid in the pipeline) as guidance, the inventor of the present disclosure conducts research from aspects of the frictional resistance coefficient f, the fluid channel length L, and the diameter D.

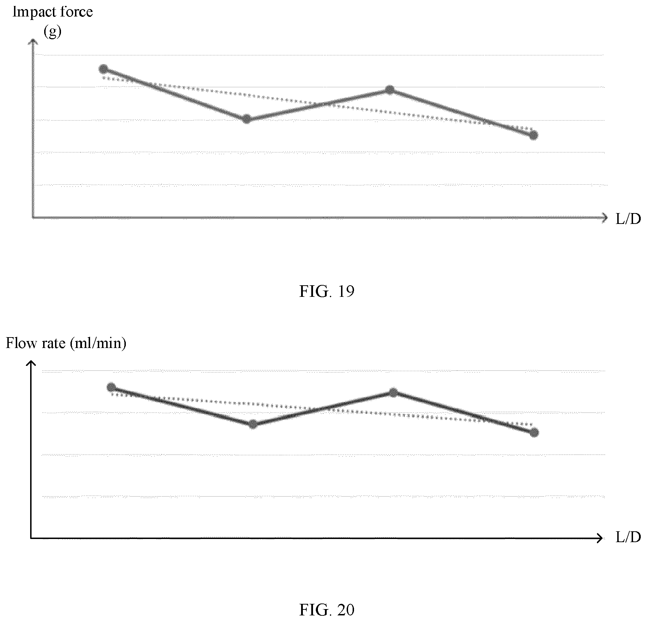

FIG. 19 shows a relationship between L/D and impact force (impact force at a liquid spray nozzle) when the frictional resistance coefficient f is fixed. As can be seen in FIG. 19, when the frictional resistance coefficient f is fixed, the impact force tends to decrease with the increase of L/D. FIG. 20 shows a relationship between L/D and flow rate when the frictional resistance coefficient f is fixed. As can be seen in FIG. 20, when the frictional resistance coefficient f is fixed, the flow rate of the liquid outlet end 320 of the pump mechanism 300 tends to decrease with the increase of L/D.

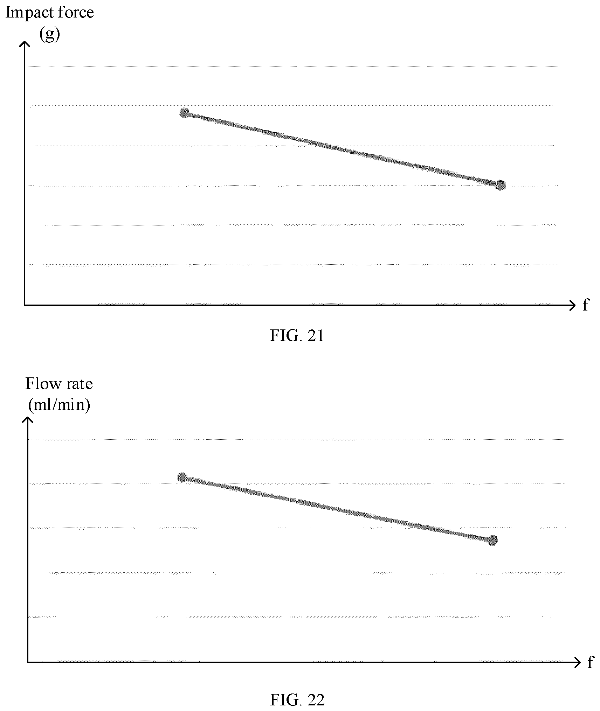

FIG. 21 shows a relationship between the frictional resistance coefficient f and the impact force when the L/D is fixed. As can be seen in FIG. 21, when the L/D is fixed, the impact force decreases with the increase of the frictional resistance coefficient f. FIG. 22 shows the relationship between the frictional resistance coefficient f and the flow rate when the L/D is fixed. As can be seen in FIG. 22, when the L/D is fixed, the flow rate decreases with the increase of the frictional resistance coefficient f.

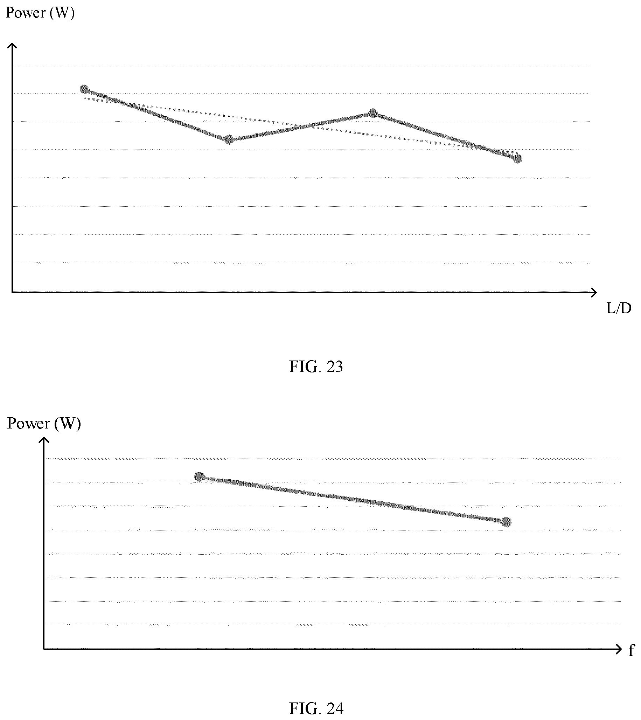

Based on research and actual measurement made by the inventor of the present disclosure, it has been proven that rated power consumption of the pump mechanism 300 is related to the L/D. FIG. 23 shows a relationship between the L/D and power of the pump mechanism 300 when the frictional resistance coefficient f is fixed. As can be seen in FIG. 23, when the frictional resistance coefficient f is fixed, the power of the pump mechanism 300 tends to decrease with the increase of the L/D.

In addition, based on research and actual measurement made by the inventor of the present disclosure, it has been proven that the rated power consumption of the pump mechanism 300 is also related to the frictional resistance coefficient f. FIG. 24 shows a relationship between the frictional resistance coefficient f and the power of the pump mechanism 300 when the frictional resistance coefficient f is fixed. As can be seen in FIG. 24, when the L/D is fixed, the power of the pump mechanism 300 decreases with the increase of the frictional resistance coefficient f.

In summary, when the impact force and the flow rate of the oral cleaner are ensured, choosing the appropriate L/D can reduce the power consumption of the water pump, which is of great significance to battery life of portable products.

In the embodiments of the present disclosure, the cleaning accessory 2000 has a first fluid channel 2200, which is the ejector flow channel. In an embodiment, the diameter of each part of the first fluid channel 2200 is basically the same, but slight differences are allowed due to process and assembly relationships or the like, which does not have a significant impact on the overall fluid channel. The cleaning accessory 2000 also has the outlet 2300 communicated with the first fluid channel 2200. In an embodiment, the cleaning accessory 2000 also includes a nozzle such as a conical nozzle. The outlet 2300 is arranged in the nozzle, and the first fluid channel 2200 is communicated with the nozzle to transport the liquid to the nozzle, such that the liquid impact is outputted through the outlet 2300.

In the embodiments of the present disclosure, the oral cleaning apparatus 1000, a casing 100 having two opposite ends extending along a first axis X, to limit and form a power cavity 110 and a liquid storage cavity 120 extending along the first axis X. the oral cleaning apparatus 1000 includes: a power unit at least partially arranged inside the power cavity 110, where the power unit includes the pump mechanism 300 having the liquid inlet end 310 and the liquid outlet end 320; the second fluid channel 730 communicated with the liquid inlet end 310 of the pump mechanism 300, where the second fluid channel 730 is communicated with the liquid storage cavity 120 and is configured to transport the liquid in the liquid storage cavity 120 to the pump mechanism 300; and a third fluid channel 740 communicated with the liquid outlet end 320 of the pump mechanism 300, where the third fluid channel 740 is communicated with the first fluid channel 2200 and is configured to output the liquid impact through the outlet 2300. The second fluid channel 730 is the liquid inlet flow channel, and the third fluid channel 740 is the liquid outlet flow channel. In an embodiment, the diameter of each part of the second fluid channel 730 is basically the same, but slight differences are allowed due to process and assembly relationships or the like, which does not have a significant impact on the overall fluid channel. Similarly, the diameter of each part of the third fluid channel 740 is basically the same, but slight differences are allowed due to process and assembly relationships or the like, which does not have a significant impact on the overall fluid channel.

The length-to-diameter ratio of at least one of the first fluid channel 2200, the second fluid channel 730 and the third fluid channel 740 ranges between 30 and 70. In the embodiments of the present disclosure, the diameter refers to a cross-sectional diameter of the inner cavity of the pipeline that forms the fluid channel, that is, the cross-sectional diameter of the fluid channel. Furthermore, the length-to-diameter ratios of at least two of the first fluid channel 2200, the second fluid channel 730 and the third fluid channel 740 range between 30 and 70, or the length-to-diameter ratios of all of these fluid channels range between 30 and 70.

In the embodiments of the present disclosure, the length-to-diameter ratio (L/D) of the first fluid channel 2200, the second fluid channel 730 and/or the third fluid channel is set between 30 and 70, and pressure drop generated when the liquid passes through the fluid channels is reduced, which can effectively reduce the power consumption of the pump mechanism 300.Furthermore, the water flow impact force is ensured while water is saved, achieving a better cleaning effect. A larger flow rate may be caused when the L/D is lower, which may lead to waste of water resources. However, when the L/D is higher, the water flow impact force is smaller, which leads to poorer cleaning capacity. In addition, the first fluid channel 2200, the second fluid channel 730, and/or the third fluid channel 740 may be at least partially made of a plastic material. Thus, existing rubber tubes with higher frictional resistance coefficient are replaced by plastic pipes with lower frictional resistance coefficient, which can effectively reduce the power consumption of the pump mechanism 300 and improve the battery life. In this way, the oral cleaner provided in the embodiments of the present disclosure has achieved balanced development in terms of water conservation, impact force, and power consumption, etc., to meet the user's needs for the oral cleaner in terms of water endurance, impact ability on dental calculus, and battery life, etc.

In the embodiments of the present disclosure, when the first fluid channel 2200, the second fluid channel 730, and the third fluid channel 740 are separately comprised of fluid sub channels formed by one or more pipeline components, the length-to-diameter ratio of at least one of the fluid sub channels ranges between 30 and 70. It should be noted that materials for making the pipeline components may be the same or different. The fluid sub channels are formed inside the pipeline components, which can improve design flexibility and assembly convenience for the oral cleaner, making it easy to be flexibly combined with other components, and a direction of liquid transportation can be flexibly adjusted. Furthermore, the pressure drop generated when the liquid passes through each fluid sub channel is smaller, which can effectively reduce the power consumption of the pump mechanism 300. Further, the length-to-diameter ratios of at least two of the first fluid channel 2200, the second fluid channel 730 and the third fluid channel 740 range between 30 and 70, or the length-to-diameter ratios of all of the three fluid channels range between 30 and 70. Of course, the length-to-diameter ratios of the fluid sub channels of at least two of the first fluid channel 2200, the second fluid channel 730 and the third fluid channel 740 all range between 30 and 70, or the length-to-diameter ratios of all the fluid sub channels of the three fluid channels range between 30 and 70.

In addition, the L/D of at least one of the first fluid channel 2200, the second fluid channel 730, and/or the third fluid channel 740 may be any value between 30 and 70, such as 30, 35, 40, 45, 50, 55, 60, 65, or 70. Based on making it convenient for the user to master the length of the oral cleaner and a model of the driving member 333 of the pump mechanism 300, further, the L/D of at least one of the first fluid channel 2200, the second fluid channel 730, and/or the third fluid channel 740 may be selected between 35 and 65, such as 35, 40, 50, 60, or 65. The diameter of the first fluid channel 2200, the second fluid channel 730, and/or the third fluid channel 740 may be 2 mm. Further, the length-to-diameter ratios of at least two of the first fluid channel 2200, the second fluid channel 730 and the third fluid channel 740 range between 35 and 65, or the length-to-diameter ratios of all of the three fluid channels range between 35 and 65.

Furthermore, the length-to-diameter ratio of at least one of the fluid sub channels of the first fluid channel 2200, the second fluid channel 730 and the third fluid channel 740 ranges between 35 and 65, or the length-to-diameter ratios of all of the fluid sub channels range between 35 and 65. Of course, the length-to-diameter ratios of the fluid sub channels of at least two of the first fluid channel 2200, the second fluid channel 730 and the third fluid channel 740 all range between 35 and 65, or the length-to-diameter ratios of all the fluid sub channels of the three fluid channels range between 35 and 65.

Specifically, the second fluid channel 730 is formed by a liquid inlet pipe assembly 700 configured to stretch into the liquid storage cavity 120. The ratio of the length of the fluid channel of the liquid inlet pipe assembly 700 to its diameter (i.e. inner diameter) ranges between 30 and 70, and further between 35 and 75.

Alternatively, the frictional resistance coefficient of the inner pipe wall of the liquid inlet pipe assembly 700 may be smaller than 0.3, such that energy consumption of the pump mechanism 300 is reduced by reducing the frictional resistance coefficient. Alternatively, at least a portion of the liquid inlet pipe assembly 700 may be made of a plastic material, where the liquid inlet pipe assembly 700 has a smooth inner pipe wall. In this way, weight of the liquid inlet pipe assembly 700 is reduced while ensuring a decrease in the frictional resistance coefficient.

The liquid inlet pipe assembly 700 may connect the bottom of the liquid storage cavity 120 to the liquid inlet end 310 of the pump mechanism 300. In FIG. 3, the liquid inlet pipe assembly 700 is comprised of a filter joint 800 and a third part 650 (which may be referred to as a first pipe body 690) of the separator 600. One end of the first pipe body 690 is communicated with the liquid inlet end 310 of the pump mechanism 300, other end of the first pipe body 690 is communicated with the filter joint 800, and one end of the filter joint 800 far away from the first pipe body 690 is communicated with the liquid storage cavity 120. Alternatively, the separator 600 may be made of a plastic material, and the third part 650 (i.e., the first pipe body 690) of the separator 600 is also integrally formed from the plastic material.

The length of the second fluid channel 730 formed by the liquid inlet pipe assembly 700 is the length of the inner cavity formed by communicating the first pipe body 690 with the filter joint 800. Specifically, the inner cavity of the liquid inlet pipe assembly 700, namely the second fluid channel 730, is formed by communicating the inner cavity of the filter joint 800 with the fourth flow channel 651 of the third part 650 (the first pipe body 690). The length of the second fluid channel 730 may be understood as a length extending from a liquid inlet end face of the filter joint 800, along the first axis X, through the inner cavity formed, to a water outlet end face of the first pipe body 690. The diameter of the second fluid channel 730 formed by the liquid inlet pipe assembly 700 is the diameter of the inner cavity formed by communicating the first pipe body 690 with the filter joint 800, and the diameter of the inner cavity formed by communicating the first pipe body 690 with the filter joint 800 is basically the same.

Alternatively, space for liquid flow is provided between a bottom end surface (such as a bottom end surface of the filter joint 800 in FIG. 3) of the liquid inlet pipe assembly 700 and a bottom cavity surface of the liquid storage cavity 120, such that liquid on the bottom surface of the liquid storage cavity 120 enters the liquid inlet pipe through this space. Furthermore, a distance h between the bottom end surface of the liquid inlet pipe assembly and the bottom cavity surface of the liquid storage cavity 120 is greater than 0 mm and less than 1 mm, such as 0.1 mm, 0.2 mm, 0.3 mm, 0.4 mm, 0.5 mm, 0.6 mm, 0.7 mm, 0.8 mm, 0.9 mm, and 1 mm. More further, the distance h may be 0.3 mm.

Alternatively, the liquid inlet pipe assembly 700 extends along the direction of the first axis X, resulting in a straight line extension of the pipeline of the liquid inlet pipe assembly 700, which greatly reduces energy loss of the water flow impact force. In addition, at least a portion of the liquid storage cavity 120 is positioned at one end of the power cavity 110 along the extension direction of the first axis X. The liquid inlet pipe extends into the bottom cavity surface of the liquid storage cavity 120 along the extension direction of the first axis X, to extract the liquid from the liquid storage cavity 120 as much as possible, thus avoiding waste of water resources due to shorter cleaning time caused by failure in extracting more liquid.

Alternatively, the filter joint 800 includes a connecting pipe 850 and a filter 860 that are sequentially communicated, where the connecting pipe 850 is closer to the first pipe body 690 and is directly communicated with the first pipe body 690. The filter 860 is made of the same material as the first pipe body 690, such that the entire second fluid channel 730 basically has the same frictional resistance coefficient. The connecting pipe 850 may be made of a soft material, and the filter 860 may be sleeved in the connecting pipe 850, depending on actual situations, the present disclosure does not impose any restrictions.

More further, the connecting pipe 850 is made of an elastic material, and in an undeformed state, the diameter of the connecting pipe 850 is equal to that of the first pipe body 690, such that the diameter of the entire liquid inlet pipe remains basically the same. The frictional resistance coefficient of the connecting pipe 850 is the same or close to that of the filter 860 and of the first pipe body 690. Even if there is greater difference, it has little impact on the entire second fluid channel 730 because the length of the connecting pipe 850 accounts for a smaller proportion in the entire second fluid channel 730. In this case, it may be still deemed that the second fluid channel 730 basically has the same frictional resistance coefficient, which has smaller fluctuation, or an average value of the frictional resistance coefficient may be adopted for the entire second fluid channel 730.

In an embodiment, at least a portion of the connecting pipe 850 close to the first pipe body 690 is sleeved on an outer wall at the other end of the first pipe body 690. This portion of the connecting pipe 850 sleeved on the first pipe body 690 undergoes deformation due to stress, and the diameter of the overlapped portion remains the diameter of the first pipe body 690. A portion of the connecting pipe 850 not sleeved on the first pipe body 690 does not undergo deformation when no stress is applied, and the diameter of this portion of the connecting pipe 850 remains the same as that of the first pipe body 690, such that the diameter of the entire liquid inlet pipe remains basically the same.

In an embodiment, at least a portion of the connecting pipe 850 away from the first pipe body 690 is sleeved on a portion of an outer wall of the filter 860, and the diameter of the filter 860 is equal to that of the first pipe body 690. Thus, the diameter of the entire liquid inlet pipe remains basically the same while the filter 860 is prevented from falling off.

In an embodiment, the filter joint 800 also includes a filter net. There may be one or more filter nets, which may be assembled on an end face of the connecting pipe 850 or in a pipeline, or may be assembled on the end face of the filter 860 or in the pipeline. There may be various embodiments. The filter net can effectively filter out impurities that may be contained in the liquid entering the liquid inlet pipe, ensuring the flow channel to be unblocked, and thus avoiding causing damage to the pump mechanism 300.

The pump mechanism 300 has a pump chamber and a second pipe body 460 (as shown in FIG. 3, a portion of the connector 400 forming the second flow channel 410) directly communicated with the pump chamber. The second pipe body 460 has a first segment 461 and a second segment 462 communicated with each other, where the first segment 461 of the second pipe body 460 is closer to the pump chamber, the second segment 462 of the second pipe body 460 is closer to the liquid inlet pipe assembly 700, and the second segment 462 of the second pipe body 460 is communicated with the second fluid channel 730.

Alternatively, the diameter of the second segment 462 of the second pipe body 460 is equal to the diameter of the second fluid channel 730, such that the diameter of the connection between the pump mechanism 300 and the liquid inlet pipe assembly 700 is equal to ensure the flow rate and the water flow impact force.

Alternatively, the diameter of the first segment 461 of the second pipe body 460 is smaller than the diameter of the second segment 462 of the second pipe body 460, to reduce the flow rate and achieve water-saving effects. Furthermore, it is also advantageous for reducing the power consumption of the pump mechanism 300 and improving the battery life. Further, the ratio of the diameter of the first segment 461 of the second pipe body 460 to the diameter of the second segment 462 of the second pipe body 460 ranges between 0.25 and 0.75, such as 0.25, 0.5, and 0.75. More further, the ratio of the diameter of the first segment 461 of the second pipe body 460 to the diameter of the second segment 462 of the second pipe body 460 is 0.5±0.1. For example, the diameter of the first segment 461 of the first pipe body 690 is 1 mm, and the diameter of the second segment 462 of the first pipe body 690 is 2 mm.

Further, an inner pipe wall of the first segment 461 of the second pipe body 460 is connected to an inner pipe wall of the second segment 462 of the second pipe body 460 by means of a conical pipe segment 463, to reduce energy loss generated during sudden changes in the diameter by means of the conical pipe segment 463 (designed like a horn mouth).

In the embodiments of the present disclosure, the power unit also includes a motor 200 having an output shaft 210. The third fluid channel 740 includes the first flow channel 211 formed by the output shaft 210 and the second flow channel 410 formed by the connector 400. The second flow channel 410 connects the liquid outlet end 320 of the pump mechanism 300 to the first flow channel 211. The first flow channel 211 is communicated with the first fluid channel 2200 in the cleaning accessory 2000, to transport the liquid thereto. The output shaft 210 not only outputs vibration power to the cleaning accessory 2000, but also serves as a pipeline component and forms a fluid sub channel, namely the first flow channel 211. The connector 400 also serves as a pipeline component and forms another fluid sub channel, namely the second flow channel 410. The first flow channel 211 and the connector 400 constitute the third fluid channel 740. Arrangement of a plurality of pipeline components improves assembly flexibility and functional diversity of oral cleaner. The length-to-diameter ratio of the first flow channel 211 ranges between 30 and 70, or the length-to-diameter ratio of the second flow channel 410 ranges between 30 and 70, such that the pressure drop generated when the liquid flows through the third fluid channel 740 is reduced, and the power consumption of the pump mechanism 300 is lowered. Further, both the length-to-diameter ratio of the first flow channel 211 and the length-to-diameter ratio of the second flow channel 410 range between 30 and 70, or both the length-to-diameter ratio of the first flow channel 211 and the length-to-diameter ratio of the second flow channel 410 range between 35 and 65.

Alternatively, the output shaft 210 is made of a metal material, which has better mechanical properties and allows the motor 200 to have a longer service life. Furthermore, the first flow channel 211 has a smooth inner wall, which has a smaller frictional resistance coefficient, so the power consumption of the pump mechanism 300 can be reduced.

Alternatively, the output shaft 210 extends along the extension direction of the first axis X, resulting in a straight line extension of the output shaft 210, which greatly reduces the energy loss of the water flow impact force.

Alternatively, the length-to-diameter ratio of the first flow channel 211 is equal to the length-to-diameter ratio of the second flow channel 410, thus ensuring consistency in the third fluid channel 740. Alternatively, the first flow channel 211, the second flow channel 410, and the second fluid channel 730 have the same length-to-diameter ratio, such that liquid input and output of the pump mechanism 300 are maintained in consistency, which guarantees the impact force generated when the liquid flows out of the outlet 2300, improves the stability of the fluid channel, and enhances the stability of the oral cleaner.

Alternatively, at least two of the first fluid channel 2200, the second fluid channel 730, and the third fluid channel 740 have the same length-to-diameter ratio; or the first fluid channel 2200, the second fluid channel 730, and the third fluid channel 740 have the same length-to-diameter ratio. Therefore, the entire liquid transportation flow channel of the oral cleaner is kept at the same length-to-diameter ratio as much as possible, to ensure consistency and stability of liquid transportation, thereby reducing the power consumption of the pump mechanism 300 and the energy loss caused during liquid transportation, ensuring the impact force generated when the liquid flows out of the outlet 2300, improving the stability of the fluid channel, and enhancing the stability of the oral cleaner.

Similarly, when the first fluid channel 2200, the second fluid channel 730, and the third fluid channel 740 are separately comprised of fluid sub channels formed by one or more pipeline components, at least two fluid sub channels have the same length-to-diameter ratio, or each of the fluid sub channels has the same length-to-diameter ratio. Therefore, the entire liquid transportation flow channel of the oral cleaner is kept at the same length-to-diameter ratio as much as possible, to ensure consistency and stability of liquid transportation, thereby reducing the power consumption of the pump mechanism 300 and the energy loss caused during liquid transportation, ensuring the impact force generated when the liquid flows out of the outlet 2300, improving the stability of the fluid channel, and enhancing the stability of the oral cleaner.

Alternatively, at least a portion of the first fluid channel 2200, at least a portion of the second fluid channel 730, and at least a portion of the third fluid channel 740 extend along the extension direction of the first axis X. For example, the first fluid channel 2200 extends along the extension direction of the first axis X, the first flow channel 211 extends along the extension direction of the first axis X, and the second fluid channel 730 extends along the extension direction of the first axis X, such that most of transportation directions of the entire liquid transportation flow channel are consistent in direction, which reduces the power consumption of the pump mechanism 300 and the energy loss caused during the liquid transportation, and ensures the impact force generated when the liquid flows out of the outlet 2300.

Alternatively, an angle is formed between a direction of outputting the liquid impact through the outlet 2300 and the extension direction of the first axis X. Specifically, an angle is formed between the direction of outputting the liquid impact through the outlet 2300 and the casing 100 of the oral cleaning apparatus 1000, making it easier for the user, when the user holds the body, to direct the outlet 2300 towards the gaps between teeth to clean the teeth through liquid impact.

Alternatively, at least a portion of the first fluid channel 2200, at least a portion of the second fluid channel 730, and at least a portion of the third fluid channel 740 have the same frictional resistance coefficient. For example, the first fluid channel 2200, the second flow channel 410, and at least a portion of the second fluid channel 730 are made of the same plastic material, and the smaller frictional resistance coefficient reduces the pressure drop of the fluid channel, reduces the power consumption of the pump mechanism 300, and ensures the impact force generated when the liquid flows out of the outlet 2300.

## Claims

1. An oral cleaner comprising:a cleaning accessory (2000) having a first fluid channel (2200) and an outlet (2300) communicated with the first fluid channel (2200); and
an oral cleaning apparatus (1000), comprising a casing (100) having two opposite ends extending along a first axis (X), an inner cavity of the casing (100) is separated into a power cavity (110) and a liquid storage cavity (120) extending along the first axis (X), the oral cleaning apparatus (1000) further comprising:
a power unit at least partially arranged inside the power cavity (110), the power unit comprising a pump mechanism (300) having a liquid inlet end (310) and a liquid outlet end (320);
a second fluid channel (730) communicated with the liquid inlet end (310) of the pump mechanism (300), the second fluid channel (730) being communicated with the liquid storage cavity (120) and being configured to transport a liquid in the liquid storage cavity (120) to the pump mechanism (300); and
a third fluid channel (740) communicated with the liquid outlet end (320) of the pump mechanism (300), the third fluid channel (740) being communicated with the first fluid channel (2200) and being configured to output liquid impact through the outlet (2300); **characterised in that**
a length-to-diameter ratio of at least one of the first fluid channel (2200), the second fluid channel (730) and the third fluid channel (740) ranges between 30 and 70;
the diameter of each part of the first fluid channel (2200) is basically the same.

2. The oral cleaner according to claim 1, wherein the length-to-diameter ratio of at least one of the first fluid channel (2200), the second fluid channel (730) and the third fluid channel (740) ranges between 35 and 65.

3. The oral cleaner according to claim 1, wherein the first fluid channel (2200), the second fluid channel (730), and the third fluid channel (740) are separately comprised of fluid sub channels formed by one or more pipeline components:the length-to-diameter ratio of at least one fluid sub channel ranges between 30 and 70; or
the length-to-diameter ratio of at least one fluid sub channel ranges between 35 and 65; or
the length-to-diameter ratio of each fluid sub channel ranges between 30 and 70; or
the length-to-diameter ratio of each fluid sub channel ranges between 35 and 65.

4. The oral cleaner according to claim 1, wherein the second fluid channel (730) is formed by a liquid inlet pipe assembly (700) configured to stretch into the liquid storage cavity (120).

5. The oral cleaner according to claim 4, wherein space for liquid flow is provided between a bottom end surface of the liquid inlet pipe assembly (700) and a bottom cavity surface of the liquid storage cavity (120); and/or
the liquid inlet pipe assembly (700) extends along an extension direction of the first axis (X).

6. The oral cleaner according to claim 5, wherein a distance between the bottom end surface of the liquid inlet pipe assembly (700) and the bottom cavity surface of the liquid storage cavity (120) is greater than 0 mm and less than 1 mm.

7. The oral cleaner according to any one of claims 4 to 6, wherein the liquid inlet pipe assembly (700) comprises a first pipe body (690) and a filter joint (800) communicated with the first pipe body (690), one end of the first pipe body (690) is communicated with the liquid inlet end (310) of the pump mechanism (300), other end of the first pipe body (690) is communicated with the filter joint (800), and one end of the filter joint (800) far away from the first pipe body (690) is communicated with the liquid storage cavity (120);a length of the second fluid channel (730) is a length of an inner cavity formed by communicating the first pipe body (690) with the filter joint (800); and
a diameter of the second fluid channel (730) is a diameter of the inner cavity formed by communicating the first pipe body (690) with the filter joint (800).

8. The oral cleaner according to claim 7, wherein the filter joint (800) comprises a connecting pipe (850) and a filter (860) sequentially communicated, and the connecting pipe (850) is closer to the first pipe body (690) and is directly communicated with the first pipe body (690).

9. The oral cleaner according to claim 8, wherein the connecting pipe (850) is made of an elastic material, and in an undeformed state, a diameter of the connecting pipe (850) is equal to a diameter of the first pipe body (690); and/orat least a portion of the connecting pipe (850) close to the first pipe body (690) is sleeved on an outer wall at the other end of the first pipe body (690); and/or
at least a portion of the connecting pipe (850) away from the first pipe body (690) is sleeved on a portion of an outer wall of the filter (860), and a diameter of the filter (860) is equal to the diameter of the first pipe body (690); and/or
the filter joint (800) further comprises a filter net; and/or
the filter (860) and the first pipe body (690) are made of a same material.

10. The oral cleaner according to any one of claims 4 to 9, wherein the pump mechanism (300) has a pump chamber and a second pipe body (460) directly communicated with the pump chamber, the second pipe body (460) has a first segment (461) and a second segment (462) communicated with each other, the first segment (461) of the second pipe body (460) is closer to the pump chamber, the second segment (462) of the second pipe body (460) is communicated with the second fluid channel (730), and a diameter of the first segment (461) of the second pipe body (460) is smaller than a diameter of the second segment (462) of the second pipe body (460).

11. The oral cleaner according to claim 10, wherein the diameter of the second segment (462) of the second pipe body (460) is equal to the diameter of the second fluid channel (730).

12. The oral cleaner according to claim 10, wherein a ratio of the diameter of the first segment (461) of the second pipe body (460) to the diameter of the second segment (462) of the second pipe body (460) ranges between 0.25 and 0.75.

13. The oral cleaner according to claim 12, wherein a ratio of the diameter of the first segment (461) of the second pipe body (460) to the diameter of the second segment (462) of the second pipe body (460) is 0.5±0.1.

14. The oral cleaner according to claim 10, wherein an inner pipe wall of the first segment (461) of the second pipe body (460) is connected to an inner pipe wall of the second segment (462) of the second pipe body (460) by means of a conical pipe segment (463).

15. The oral cleaner according to any one of claims 4 to 9, wherein a frictional resistance coefficient of an inner pipe wall of the liquid inlet pipe assembly (700) is less than 0.3.

16. The oral cleaner according to any one of claims 4 to 9, wherein the liquid inlet pipe assembly (700) is at least partially made of a plastic material.

17. The oral cleaner according to claim 1, wherein the power unit further comprises a motor (200) having an output shaft (210);the third fluid channel (740) comprises a first flow channel (211) formed by the output shaft (210) and a second flow channel (410) formed by a connector (400), the second flow channel (410) connects the liquid outlet end (320) of the pump mechanism (300) to the first flow channel (211); and
a length-to-diameter ratio of the first flow channel (211) ranges between 30 and 70, or a length-to-diameter ratio of the second flow channel (410) ranges between 30 and 70.

18. The oral cleaner according to claim 17, wherein both the length-to-diameter ratio of the first flow channel (211) and the length-to-diameter ratio of the second flow channel (410) range between 30 and 70; and/orboth the length-to-diameter ratio of the first flow channel (211) and the length-to-diameter ratio of the second flow channel (410) range between 35 and 65; and/or the output shaft (210) is made of a metal material; and/or
the output shaft (210) extends along the extension direction of the first axis (X); and
the length-to-diameter ratio of the first flow channel (211) is equal to the length-to-diameter ratio of the second flow channel (410).

19. The oral cleaner according to claim 1, wherein at least two of the first fluid channel (2200), the second fluid channel (730), and the third fluid channel (740) have the same length-to-diameter ratio; or
the first fluid channel (2200), the second fluid channel (730), and the third fluid channel (740) have the same length-to-diameter ratio.

20. The oral cleaner according to claim 3, wherein at least two fluid sub channels have the same length-to-diameter ratio; or
each of the fluid sub channels has the same length-to-diameter ratio.

21. The oral cleaner according to claim 1, wherein at least a portion of the first fluid channel (2200), at least a portion of the second fluid channel (730), and at least a portion of the third fluid channel (740) extend along the extension direction of the first axis (X); and/or
an angle is formed between a direction of outputting the liquid impact through the outlet (2300) and the extension direction of the first axis (X).

22. The oral cleaner according to claim 1, wherein at least a portion of the first fluid channel (2200), at least a portion of the second fluid channel (730), and at least a portion of the third fluid channel (740) have the same frictional resistance coefficient.

## Patentansprüche

1. . Mundreiniger, umfassend: ein Reinigungszubehör (2000), das einen ersten Fluidkanal (2200) und einen mit dem ersten Fluidkanal (2200) in Verbindung stehenden Auslass (2300) aufweist; und
eine Mundreinigungsvorrichtung (1000), umfassend ein Gehäuse (100) mit zwei gegenüberliegenden Enden, die sich entlang einer ersten Achse (X) erstrecken, wobei ein Innenhohlraum des Gehäuses (100) in einen Leistungshohlraum (110) und einen sich entlang der ersten Achse (X) erstreckenden Flüssigkeitsspeicherhohlraum (120) getrennt ist, wobei die Mundreinigungsvorrichtung (1000) weiter umfasst:
eine mindestens teilweise innerhalb des Leistungshohlraums (110) angeordnete Leistungseinheit, wobei die Leistungseinheit einen Pumpenmechanismus (300) umfasst, der ein Flüssigkeitseinlassende (310) und ein Flüssigkeitsauslassende (320) aufweist;
einen zweiten Fluidkanal (730), der mit dem Flüssigkeitseinlassende (310) des Pumpenmechanismus (300) in Verbindung steht, wobei der zweite Fluidkanal (730) mit dem Flüssigkeitsspeicherhohlraum (120) in Verbindung steht und so ausgebildet ist, dass er eine Flüssigkeit in dem Flüssigkeitsspeicherhohlraum (120) zu dem Pumpenmechanismus (300) transportiert; und
einen dritten Fluidkanal (740), der mit dem Flüssigkeitsauslassende (320) des Pumpenmechanismus (300) in Verbindung steht, wobei der dritte Fluidkanal (740) mit dem ersten Fluidkanal (2200) in Verbindung steht und so ausgebildet ist, dass er einen Flüssigkeitsstoß durch den Auslass (2300) ausgibt; **dadurch gekennzeichnet, dass**
ein Längen-Durchmesser-Verhältnis von mindestens einem des ersten Fluidkanals (2200), des zweiten Fluidkanals (730) und des dritten Fluidkanals (740) zwischen 30 und 70 liegt;
der Durchmesser jedes Teils des ersten Fluidkanals (2200) im Wesentlichen gleich ist.

2. . Mundreiniger nach Anspruch 1, wobei das Längen-Durchmesser-Verhältnis von mindestens einem des ersten Fluidkanals (2200), des zweiten Fluidkanals (730) und des dritten Fluidkanals (740) zwischen 35 und 65 liegt.

3. . Mundreiniger nach Anspruch 1, wobei der erste Fluidkanal (2200), der zweite Fluidkanal (730) und der dritte Fluidkanal (740) jeweils aus Fluid-Teilkanälen bestehen, die durch eine oder mehrere Rohrleitungskomponenten gebildet sind: das Längen-Durchmesser-Verhältnis von mindestens einem Fluid-Teilkanal liegt zwischen 30 und 70; oder
das Längen-Durchmesser-Verhältnis von mindestens einem Fluid-Teilkanal liegt zwischen 35 und 65; oder
das Längen-Durchmesser-Verhältnis jedes Fluid-Teilkanals liegt zwischen 30 und 70; oder
das Längen-Durchmesser-Verhältnis jedes Fluid-Teilkanals liegt zwischen 35 und 65.

4. . Mundreiniger nach Anspruch 1, wobei der zweite Fluidkanal (730) durch eine Flüssigkeitseinlassrohrbaugruppe (700) gebildet wird, die so ausgebildet ist, dass sie sich in den Flüssigkeitsspeicherhohlraum (120) erstreckt.

5. . Mundreiniger nach Anspruch 4, wobei zwischen einer unteren Endfläche der Flüssigkeitseinlassrohrbaugruppe (700) und einer unteren Hohlraumfläche des Flüssigkeitsspeicherhohlraums (120) Raum für den Flüssigkeitsfluss vorgesehen ist; und/oder
die Flüssigkeitseinlassrohrbaugruppe (700) sich entlang einer Erstreckungsrichtung der ersten Achse (X) erstreckt.

6. . Mundreiniger nach Anspruch 5, wobei ein Abstand zwischen der unteren Endfläche der Flüssigkeitseinlassrohrbaugruppe (700) und der unteren Hohlraumfläche des Flüssigkeitsspeicherhohlraums (120) größer als 0 mm und kleiner als 1 mm ist.

7. . Mundreiniger nach einem der Ansprüche 4 bis 6, wobei die Flüssigkeitseinlassrohrbaugruppe (700) einen ersten Rohrkörper (690) und eine Filterverbindung (800) umfasst, die mit dem ersten Rohrkörper (690) verbunden sind, ein Ende des ersten Rohrkörpers (690) mit dem Flüssigkeitseinlassende (310) des Pumpenmechanismus (300) in Verbindung steht, das andere Ende des ersten Rohrkörpers (690) mit der Filterverbindung (800) in Verbindung steht und ein Ende der Filterverbindung (800) weit entfernt von dem ersten Rohrkörper (690) mit dem Flüssigkeitsspeicherhohlraum (120) in Verbindung steht; eine Länge des zweiten Fluidkanals (730) eine Länge eines Innenhohlraums ist, der durch die Verbindung des ersten Rohrkörpers (690) mit der Filterverbindung (800) gebildet wird; und
ein Durchmesser des zweiten Fluidkanals (730) ein Durchmesser des Innenhohlraums ist, der durch die Verbindung des ersten Rohrkörpers (690) mit der Filterverbindung (800) gebildet wird.

8. . Mundreiniger nach Anspruch 7, wobei die Filterverbindung (800) ein Verbindungsrohr (850) und einen Filter (860) umfasst, die sequenziell in Verbindung stehen, und das Verbindungsrohr (850) näher an dem ersten Rohrkörper (690) ist und direkt mit dem ersten Rohrkörper (690) in Verbindung steht.

9. . Mundreiniger nach Anspruch 8, wobei das Verbindungsrohr (850) aus einem elastischen Material besteht und in einem unverformten Zustand ein Durchmesser des Verbindungsrohrs (850) gleich einem Durchmesser des ersten Rohrkörpers (690) ist; und/oder mindestens ein Abschnitt des Verbindungsrohrs (850) nahe dem ersten Rohrkörper (690) auf eine Außenwand an dem anderen Ende des ersten Rohrkörpers (690) aufgesteckt ist; und/oder
mindestens ein von dem ersten Rohrkörper (690) entfernter Abschnitt des Verbindungsrohrs (850) auf einen Abschnitt einer Außenwand des Filters (860) aufgesteckt ist, und ein Durchmesser des Filters (860) gleich dem Durchmesser des ersten Rohrkörpers (690) ist; und/oder
die Filterverbindung (800) ferner ein Filternetz umfasst; und/oder
der Filter (860) und der erste Rohrkörper (690) aus demselben Material bestehen.

10. . Mundreiniger nach einem der Ansprüche 4 bis 9, wobei der Pumpenmechanismus (300) eine Pumpenkammer und einen zweiten Rohrkörper (460) aufweist, der direkt mit der Pumpenkammer in Verbindung steht, der zweite Rohrkörper (460) ein erstes Segment (461) und ein zweites Segment (462) aufweist, die miteinander in Verbindung stehen, das erste Segment (461) des zweiten Rohrkörpers (460) näher an der Pumpenkammer liegt, das zweite Segment (462) des zweiten Rohrkörpers (460) mit dem zweiten Fluidkanal (730) in Verbindung steht, und ein Durchmesser des ersten Segments (461) des zweiten Rohrkörpers (460) kleiner ist als ein Durchmesser des zweiten Segments (462) des zweiten Rohrkörpers (460).

11. . Mundreiniger nach Anspruch 10, wobei der Durchmesser des zweiten Segments (462) des zweiten Rohrkörpers (460) gleich dem Durchmesser des zweiten Fluidkanals (730) ist.

12. . Mundreiniger nach Anspruch 10, wobei ein Verhältnis des Durchmessers des ersten Segments (461) des zweiten Rohrkörpers (460) zu dem Durchmesser des zweiten Segments (462) des zweiten Rohrkörpers (460) zwischen 0,25 und 0,75 liegt.

13. . Mundreiniger nach Anspruch 12, wobei ein Verhältnis des Durchmessers des ersten Segments (461) des zweiten Rohrkörpers (460) zu dem Durchmesser des zweiten Segments (462) des zweiten Rohrkörpers (460) 0,5±0,1 beträgt.

14. . Mundreiniger nach Anspruch 10, wobei eine Innenrohrwand des ersten Segments (461) des zweiten Rohrkörpers (460) mittels eines konischen Rohrsegments (463) mit einer Innenrohrwand des zweiten Segments (462) des zweiten Rohrkörpers (460) verbunden ist.

15. . Mundreiniger nach einem der Ansprüche 4 bis 9, wobei ein Reibungswiderstandskoeffizient einer Innenrohrwand der Flüssigkeitseinlassrohrbaugruppe (700) kleiner als 0,3 ist.

16. . Mundreiniger nach einem der Ansprüche 4 bis 9, wobei die Flüssigkeitseinlassrohrbaugruppe (700) mindestens teilweise aus einem Kunststoffmaterial besteht.

17. . Mundreiniger nach Anspruch 1, wobei die Leistungseinheit weiter einen Motor (200) mit einer Abtriebswelle (210) umfasst; der dritte Fluidkanal (740) einen ersten Strömungskanal (211), der von der Abtriebswelle (210) gebildet wird, und einen zweiten Strömungskanal (410), der durch ein Verbindungsstück (400) gebildet wird, umfasst, wobei der zweite Strömungskanal (410) das Flüssigkeitsauslassende (320) des Pumpenmechanismus (300) mit dem ersten Strömungskanal (211) verbindet; und
ein Längen-Durchmesser-Verhältnis des ersten Strömungskanals (211) zwischen 30 und 70 liegt, oder ein Längen-Durchmesser-Verhältnis des zweiten Strömungskanals (410) zwischen 30 und 70 liegt.

18. . Mundreiniger nach Anspruch 17, wobei sowohl das Längen-Durchmesser-Verhältnis des ersten Strömungskanals (211) als auch das Längen-Durchmesser-Verhältnis des zweiten Strömungskanals (410) zwischen 30 und 70 liegen; und/oder sowohl das Längen-Durchmesser-Verhältnis des ersten Strömungskanals (211) als auch das Längen-Durchmesser-Verhältnis des zweiten Strömungskanals (410) zwischen 35 und 65 liegen; und/oder
die Abtriebswelle (210) aus einem Metallmaterial besteht; und/oder
die Abtriebswelle (210) sich entlang der Erstreckungsrichtung der ersten Achse (X) erstreckt; und
das Längen-Durchmesser-Verhältnis des ersten Strömungskanals (211) gleich dem Längen-Durchmesser-Verhältnis des zweiten Strömungskanals (410) ist.

19. . Mundreiniger nach Anspruch 1, wobei mindestens zwei des ersten Fluidkanals (2200), des zweiten Fluidkanals (730) und des dritten Fluidkanals (740) das gleiche Längen-Durchmesser-Verhältnis aufweisen; oder
der erste Fluidkanal (2200), der zweite Fluidkanal (730) und der dritte Fluidkanal (740) das gleiche Längen-Durchmesser-Verhältnis aufweisen.

20. . Mundreiniger nach Anspruch 3, wobei mindestens zwei Fluid-Teilkanäle das gleiche Längen-Durchmesser-Verhältnis aufweisen; oder
jeder der Fluid-Teilkanäle das gleiche Längen-Durchmesser-Verhältnis aufweist.

21. . Mundreiniger nach Anspruch 1, wobei sich mindestens ein Abschnitt des ersten Fluidkanals (2200), mindestens ein Abschnitt des zweiten Fluidkanals (730) und mindestens ein Abschnitt des dritten Fluidkanals (740) entlang der Erstreckungsrichtung der ersten Achse (X) erstrecken; und/oder
zwischen einer Richtung der Abgabe des Flüssigkeitsstoßes durch den Auslass (2300) und der Erstreckungsrichtung der ersten Achse (X) ein Winkel gebildet wird.

22. . Mundreiniger nach Anspruch 1, wobei mindestens ein Abschnitt des ersten Fluidkanals (2200), mindestens ein Abschnitt des zweiten Fluidkanals (730) und mindestens ein Abschnitt des dritten Fluidkanals (740) denselben Reibungswiderstandskoeffizienten aufweisen.

## Revendications

1. Dispositif de nettoyage buccal comportant : un accessoire de nettoyage (2000) présentant un premier canal de fluide (2200) et une sortie (2300) communiquant avec le premier canal de fluide (2200) ; et
un appareil de nettoyage buccal (1000), comportant un boîtier (100) présentant deux extrémités opposées s'étendant le long d'un premier axe (X), une cavité interne du boîtier (100) est séparée en une cavité de puissance (110) et une cavité de stockage de liquide (120) s'étendant le long du premier axe (X), l'appareil de nettoyage buccal (1000) comportant en outre :
une unité de puissance au moins partiellement agencée à l'intérieur de la cavité de puissance (110), l'unité de puissance comportant un mécanisme de pompe (300) présentant une extrémité d'entrée de liquide (310) et une extrémité de sortie de liquide (320) ;
un deuxième canal de fluide (730) communiquant avec l'extrémité d'entrée de liquide (310) du mécanisme de pompe (300), le deuxième canal de fluide (730) étant communicant avec la cavité de stockage de liquide (120) et étant conçu pour transporter un liquide dans la cavité de stockage de liquide (120) vers le mécanisme de pompe (300) ; et
un troisième canal de fluide (740) communiquant avec l'extrémité de sortie de liquide (320) du mécanisme de pompe (300), le troisième canal de fluide (740) étant communicant avec le premier canal de fluide (2200) et étant conçu pour délivrer un impact de liquide à travers la sortie (2300) ; **caractérisé en ce que**
un rapport longueur/diamètre d'au moins l'un parmi le premier canal de fluide (2200), le deuxième canal de fluide (730) et le troisième canal de fluide (740) va de 30 à 70 ;
le diamètre de chaque partie du premier canal de fluide (2200) est essentiellement le même.

2. Dispositif de nettoyage buccal selon la revendication 1, dans lequel le rapport longueur/diamètre d'au moins l'un parmi le premier canal de fluide (2200), le deuxième canal de fluide (730) et le troisième canal de fluide (740) va de 35 à 65.

3. Dispositif de nettoyage buccal selon la revendication 1, dans lequel le premier canal de fluide (2200), le deuxième canal de fluide (730) et le troisième canal de fluide (740) sont séparés et comportent des sous-canaux de fluide formés par un ou plusieurs composants de canalisation : le rapport longueur/diamètre d'au moins un sous-canal de fluide va de 30 à 70 ; ou
le rapport longueur/diamètre d'au moins un sous-canal de fluide va de 35 à 65 ; ou
le rapport longueur/diamètre de chaque sous-canal de fluide va de 30 à 70 ; ou
le rapport longueur/diamètre de chaque sous-canal de fluide va de 35 à 65.

4. Dispositif de nettoyage buccal selon la revendication 1, dans lequel le deuxième canal de fluide (730) est formé par un ensemble tuyau d'entrée de liquide (700) conçu pour s'étirer dans la cavité de stockage de liquide (120).

5. Dispositif de nettoyage buccal selon la revendication 4, dans lequel un espace pour l'écoulement de liquide est prévu entre une surface d'extrémité inférieure de l'ensemble tuyau d'entrée de liquide (700) et une surface de cavité inférieure de la cavité de stockage de liquide (120) ; et/ou
l'ensemble tuyau d'entrée de liquide (700) s'étend le long d'une direction d'extension du premier axe (X).

6. Dispositif de nettoyage buccal selon la revendication 5, dans lequel une distance entre la surface d'extrémité inférieure de l'ensemble tuyau d'entrée de liquide (700) et la surface de cavité inférieure de la cavité de stockage de liquide (120) est supérieure à 0 mm et inférieure à 1 mm.

7. Dispositif de nettoyage buccal selon l'une quelconque des revendications 4 à 6, dans lequel l'ensemble tuyau d'entrée de liquide (700) comporte un premier corps de tuyau (690) et un joint de filtre (800) communiquant avec le premier corps de tuyau (690), une extrémité du premier corps de tuyau (690) est communicante avec l'extrémité d'entrée de liquide (310) du mécanisme de pompe (300), l'autre extrémité du premier corps de tuyau (690) est communicante avec le joint de filtre (800), et une extrémité du joint de filtre (800) éloignée du premier corps de tuyau (690) est communicante avec la cavité de stockage de liquide (120) ; une longueur du deuxième canal de fluide (730) est une longueur d'une cavité interne formée par la communication du premier corps de tuyau (690) avec le joint de filtre (800) ; et
un diamètre du deuxième canal de fluide (730) est un diamètre de la cavité interne formée par la communication du premier corps de tuyau (690) avec le joint de filtre (800).

8. Dispositif de nettoyage buccal selon la revendication 7, dans lequel le joint de filtre (800) comporte un tuyau de raccordement (850) et un filtre (860) communiquant séquentiellement, et le tuyau de raccordement (850) est plus proche du premier corps de tuyau (690) et est directement communicant avec le premier corps de tuyau (690).

9. Dispositif de nettoyage buccal selon la revendication 8, dans lequel le tuyau de raccordement (850) est composé d'un matériau élastique, et dans un état non déformé, un diamètre du tuyau de raccordement (850) est égal à un diamètre du premier corps de tuyau (690) ; et/ou au moins une partie du tuyau de raccordement (850) proche du premier corps de tuyau (690) est emmanchée sur une paroi externe au niveau de l'autre extrémité du premier corps de tuyau (690) ; et/ou
au moins une partie du tuyau de raccordement (850) éloignée du premier corps de tuyau (690) est emmanchée sur une partie d'une paroi externe du filtre (860), et un diamètre du filtre (860) est égal au diamètre du premier corps de tuyau (690) ; et/ou
le joint de filtre (800) comporte en outre un filet filtrant ; et/ou
le filtre (860) et le premier corps de tuyau (690) sont composés d'un même matériau.

10. Dispositif de nettoyage buccal selon l'une quelconque des revendications 4 à 9, dans lequel le mécanisme de pompe (300) présente une chambre de pompe et un deuxième corps de tuyau (460) en communication directe avec la chambre de pompe, le deuxième corps de tuyau (460) présente un premier segment (461) et un deuxième segment (462) communiquant entre eux, le premier segment (461) du deuxième corps de tuyau (460) est plus proche de la chambre de pompe, le deuxième segment (462) du deuxième corps de tuyau (460) est en communication avec le deuxième canal de fluide (730), et un diamètre du premier segment (461) du deuxième corps de tuyau (460) est inférieur à un diamètre du deuxième segment (462) du deuxième corps de tuyau (460).

11. Dispositif de nettoyage buccal selon la revendication 10, dans lequel le diamètre du deuxième segment (462) du deuxième corps de tuyau (460) est égal au diamètre du deuxième canal de fluide (730).

12. Dispositif de nettoyage buccal selon la revendication 10, dans lequel un rapport du diamètre du premier segment (461) du deuxième corps de tuyau (460) au diamètre du deuxième segment (462) du deuxième corps de tuyau (460) va de 0,25 à 0,75.

13. Dispositif de nettoyage buccal selon la revendication 12, dans lequel un rapport du diamètre du premier segment (461) du deuxième corps de tuyau (460) au diamètre du deuxième segment (462) du deuxième corps de tuyau (460) est de 0,5 ± 0,1.

14. Dispositif de nettoyage buccal selon la revendication 10, dans lequel une paroi de tuyau interne du premier segment (461) du deuxième corps de tuyau (460) est raccordée à une paroi de tuyau interne du deuxième segment (462) du deuxième corps de tuyau (460) au moyen d'un segment de tuyau conique (463).

15. Dispositif de nettoyage buccal selon l'une quelconque des revendications 4 à 9, dans lequel un coefficient de résistance au frottement d'une paroi de tuyau interne de l'ensemble tuyau d'entrée de liquide (700) est inférieur à 0,3.

16. Dispositif de nettoyage buccal selon l'une quelconque des revendications 4 à 9, dans lequel l'ensemble tuyau d'entrée de liquide (700) est au moins partiellement composé d'un matériau plastique.

17. Dispositif de nettoyage buccal selon la revendication 1, dans lequel l'unité de puissance comporte en outre un moteur (200) présentant un arbre de sortie (210) ; le troisième canal de fluide (740) comporte un premier canal d'écoulement (211) formé par l'arbre de sortie (210) et un deuxième canal d'écoulement (410) formé par un raccord (400), le deuxième canal d'écoulement (410) raccorde l'extrémité de sortie de liquide (320) du mécanisme de pompe (300) au premier canal d'écoulement (211) ; et
un rapport longueur/diamètre du premier canal d'écoulement (211) va de 30 à 70, ou un rapport longueur/diamètre du deuxième canal d'écoulement (410) va de 30 à 70.

18. Dispositif de nettoyage buccal selon la revendication 17, dans lequel à la fois le rapport longueur/diamètre du premier canal d'écoulement (211) et le rapport longueur/diamètre du deuxième canal d'écoulement (410) vont de 30 à 70 ; et/ou à la fois le rapport longueur/diamètre du premier canal d'écoulement (211) et le rapport longueur/diamètre du deuxième canal d'écoulement (410) vont de 35 à 65 ; et/ou
l'arbre de sortie (210) est composé d'un matériau métallique ; et/ou
l'arbre de sortie (210) s'étend le long de la direction d'extension du premier axe (X) ; et
le rapport longueur/diamètre du premier canal d'écoulement (211) est égal au rapport longueur/diamètre du deuxième canal d'écoulement (410).

19. Dispositif de nettoyage buccal selon la revendication 1, dans lequel au moins deux éléments parmi le premier canal de fluide (2200), le deuxième canal de fluide (730) et le troisième canal de fluide (740) présentent le même rapport longueur/diamètre ; ou
le premier canal de fluide (2200), le deuxième canal de fluide (730) et le troisième canal de fluide (740) présentent le même rapport longueur/diamètre.

20. Dispositif de nettoyage buccal selon la revendication 3, dans lequel au moins deux sous-canaux de fluide présentent le même rapport longueur/diamètre ; ou
chacun des sous-canaux de fluide présente le même rapport longueur/diamètre.

21. Dispositif de nettoyage buccal selon la revendication 1, dans lequel au moins une partie du premier canal de fluide (2200), au moins une partie du deuxième canal de fluide (730), et au moins une partie du troisième canal de fluide (740) s'étendent le long de la direction d'extension du premier axe (X); et/ou
un angle est formé entre une direction de sortie de l'impact de liquide à travers la sortie (2300) et la direction d'extension du premier axe (X).

22. Dispositif de nettoyage buccal selon la revendication 1, dans lequel au moins une partie du premier canal de fluide (2200), au moins une partie du deuxième canal de fluide (730), et au moins une partie du troisième canal de fluide (740) présentent le même coefficient de résistance au frottement.
